# EUROPEAN PATENT APPLICATION

(11) **EP 4 528 186 A1**
(43) Date of publication of application: **26.03.2025**
(21) Application number: 22949510.6
(22) Date of filing: 27.06.2022
(51) Int. Cl.: F25D 23/02, F25D 29/00, F25D 27/00, F21V 33/00, G06V 40/16

(54) **REFRIGERATOR AND METHOD FOR CONTROLLING REFRIGERATOR**

(71) Applicant: LG Electronics Inc., Yeongdeungpo-gu Seoul 07336 (KR)
(72) Inventor: HA, Yoon, Seoul 06772 (KR); SHIN, Yongchul, Seoul 06772 (KR); SON, Joohee, Seoul 06772 (KR); HONG, Jipyo, Seoul 06772 (KR); KIM, Minhyeok, Seoul 06772 (KR)
(74) Representative: Vossius & Partner Patentanwälte Rechtsanwälte mbB
(86) International application number: PCT/KR2022/009093
(87) International publication number: WO 2024/005217

(57) **Abstract**

One embodiment of the present invention provides a refrigerator characterized by comprising: a cabinet forming at least one space; a display door composed of a display panel which opens and closes the space and outputs information; first, second, and third doors which open and close the space and have light sources capable of outputting RGB colors; and a control unit for controlling the display panel and the light sources, wherein the control unit outputs at least one color on the first door, the second door, and the third door.

## Description

### [Technical Field]

The present disclosure relates to a refrigerator and a method for controlling a refrigerator.

### [Background]

In general, a refrigerator is a home appliance that allows food to be stored at a low temperature in an internal storage space that is shielded by a refrigerator door. The refrigerator may store the stored food in an optimal state by cooling an interior of the storage space using cold air generated via a heat exchange with a refrigerant circulating in a refrigeration cycle.

Such refrigerator is gradually becoming larger and more multifunctional in accordance with a change in a dietary habit and a trend of a luxury product, and a refrigerator having various structures and equipped with convenience devices in consideration of a user convenience is being released.

Technologies for varying an outer appearance of a refrigerator door front surface are being developed for harmony with an environment in which the refrigerator is placed or with surrounding furniture or home appliances, and such trend is taking place throughout the general home appliance.

U.S. Patent No. 8789900 (hereinafter, referred to as "Prior Document 1") discloses a structure in which a decor panel forming an outer appearance is mounted on the door front surface of the refrigerator. The decor panel is constructed to be detachable, thereby forming an outer appearance of the door front surface based on a user's preference.

However, in the refrigerator of Prior Document 1, when the user wants to change the outer appearance, an entirety of the decor panel must be removed and replaced, and the decor panel before the replacement is not able to be used any longer.

In order to solve such problem, Chinese Patent No. 103250018 (hereinafter, referred to as "Prior Document 2") discloses a refrigerator in which a reflective layer and a transparent panel are arranged on the door front surface of the refrigerator, and a light emitting member having a color is mounted on each of both ends of the reflective layer such that the transparent panel may emit light with a set color.

However, in the case of Prior Document 2, a technology for operating the light emitting member or controlling the operation of the light emitting member in the refrigerator is not disclosed.

### [Summary]

### [Technical Problem]

The present disclosure is directed to providing a refrigerator and a method for controlling the refrigerator in which a color of a door can be changed in order to solve one or more of the above problems.

### [Technical Solutions]

An embodiment of the present disclosure provides a refrigerator including a cabinet defining at least one space therein, a display door that opens and closes the space and is composed of a display panel that outputs information, a first door, a second door, and a third door that open and close the space and include light sources capable of rendering RGB colors, and a controller that controls the display panel and the light sources, wherein the controller outputs at least one color on the first door, the second door, and the third door.

The controller may extract a representative color from a background screen being output on the display panel, and generate at least one color related to the extracted representative color.

The controller may receive a second color from a user via the display panel, recommend a third color and a fourth color corresponding to the second color, and output the second color, the third color, and the fourth color on the first door, the second door, and the third door, respectively.

The controller may change the color of the first door, the second door, and the third door based on time.

The refrigerator may further include an illuminance sensor that senses a surrounding illuminance, and the controller may change the color of the first door, the second door, and the third door based on illuminance information received from the illuminance sensor.

The display door may include a front camera, and the controller may recognize a user's face via the front camera,
analyze the recognized face to generate face information, and change the color of the first door, the second door, and the third door based on the face information.

The controller may change the color of the first door, the second door, and the third door based on weather information.

The controller may output at least one question on the display panel, receive an answer to the question from a user, and
change the color of the first door, the second door, and the third door based on the answer.

The controller may execute a timer application on the display panel, and change the color of the first door, the second door, and the third door based on timer information of the timer application.

The controller may execute a schedule application on the display panel, and change the color of the first door, the second door, and the third door based on schedule information and current time included in the schedule application.

The controller may receive a first notification from a first application, output information on the first notification on the display panel, and
output a color corresponding to the first application on the first door.

The controller may receive a second notification from a second application, output information on the second notification on the display panel, and
output a color corresponding to the second application on the second door, wherein the second notification is received later than the first notification.

The controller may receive a third notification from the first application, output information on the third notification on the display panel, and
divide the first door into a first area and a second area, and output the color corresponding to the first application on the first area and the second area.

The light source included in at least one of the first door, the second door, and the third door may have one of a lower edge structure, a side edge structure, a lower-and-side edge structure, and a downward-directed structure, the controller may irradiate light to the light guide plate using the light source, light irradiated to the light guide plate may pass through the front plate, and when the light source is turned on, the front plate may emit light with a first color.

An embodiment of the present disclosure provides a method for controlling a refrigerator including a cabinet defining at least one space therein, a display door that opens and closes the space and is composed of a display panel that outputs information, a first door, a second door, and a third door that open and close the space and include light sources capable of rendering RGB colors, and a controller that controls the display panel and the light sources, the method including outputting at least one color on the first door, the second door, and the third door.

### [Advantageous Effects]

According to an embodiment of the present disclosure, the color of the door of the refrigerator may be easily changed.

In addition, according to an embodiment of the present disclosure, the refrigerator may control the color of the door to dynamically change depending on the surrounding environment.

In addition, according to an embodiment of the present disclosure, the refrigerator may change the color of the door depending on the user's emotion, thereby inducing the positive emotion when the user sees or uses the refrigerator.

Effects that may be obtained from the present disclosure are not limited to the effects mentioned above, and other effects not mentioned are able to be clearly understood by those skilled in the art in the technical field to which the present disclosure belongs from a description below.

### [Brief Description of the Drawings]

FIG. 1 is a perspective view of a refrigerator according to an embodiment of the present disclosure, and FIG. 2 is a front view with an open door of a refrigerator according to an embodiment of the present disclosure.
FIG. 3 is a perspective view of a refrigerator door according to an embodiment of the present disclosure, and FIG. 4 is a view showing a state in which a panel assembly is separated from a refrigerator door according to an embodiment of the present disclosure,.
FIG. 5 is a cross-sectional view taken along a line 5-5 in FIG. 4 according to an embodiment of the present disclosure, and FIG. 6 is a view showing an arrangement of a light guide plate and a light source according to an embodiment of the present disclosure,.
FIG. 7 is a block diagram showing a flow of a control signal of a refrigerator according to an embodiment of the present disclosure, FIG. 8 is a view showing a state in which some of doors are emitting light in a refrigerator according to an embodiment of the present disclosure, and FIG. 9 is a view showing a state in which all of a plurality of doors are emitting light in a refrigerator according to an embodiment of the present disclosure.
FIG. 10, including parts (a) and (b), and FIG. 11, including parts (a)-(d), are views for illustrating a display door having a transparent display panel according to an embodiment of the present disclosure.
FIG. 12, including parts (a)-(d), is a view for illustrating locations of a light guide plate and a light source of an LED door according to an embodiment of the present disclosure.
FIGS. 13a and 13b are views for illustrating a method for recognizing food in a refrigerator according to an embodiment of the present disclosure.
FIG. 14 is a view illustrating an embodiment of changing a color of a door based on a background screen of a display door in a refrigerator according to an embodiment of the present disclosure.
FIG. 15 is a view illustrating an embodiment of selecting a color of a door by a user via a display door in a refrigerator according to an embodiment of the present disclosure.
FIG. 16 is a view illustrating an embodiment of changing a color of a door based on time in a refrigerator according to an embodiment of the present disclosure.
FIG. 17 is a view illustrating an embodiment of changing a color of a door based on face information of a user recognized via a camera in a refrigerator according to an embodiment of the present disclosure.
FIG. 18 is a view illustrating an embodiment of changing a color of a door based on weather information in a refrigerator according to an embodiment of the present disclosure.
FIG. 19 is a view illustrating an embodiment of changing a color of a door based on input information in a refrigerator according to an embodiment of the present disclosure.
FIG. 20 is a view illustrating an embodiment of changing a color of a door based on timer information in a refrigerator according to an embodiment of the present disclosure.
FIG. 21 is a view illustrating an embodiment of changing a color of a door based on schedule information in a refrigerator according to an embodiment of the present disclosure.
FIGS. 22a and 22b are views illustrating an embodiment of changing a color of a door based on a notification in a refrigerator according to an embodiment of the present disclosure.
FIG. 23 is a flowchart illustrating a method for controlling a refrigerator according to an embodiment of the present disclosure.

### [Best Mode]

Description will now be given in detail according to exemplary embodiments disclosed herein, with reference to the accompanying drawings. For the sake of brief description with reference to the drawings, the same or equivalent components can be provided with the same reference numbers, and description thereof will not be repeated. In general, a suffix such as "module" and "unit" can be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. can be used herein to describe various elements, these elements should not be limited by these terms. These terms are generally only used to distinguish one element from another.

It will be understood that when an element is referred to as being "connected with" another element, the element can be directly connected with the other element or intervening elements can also be present. In contrast, when an element is referred to as being "directly connected with" another element, there are no intervening elements present.

A singular representation can include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps can likewise be utilized.

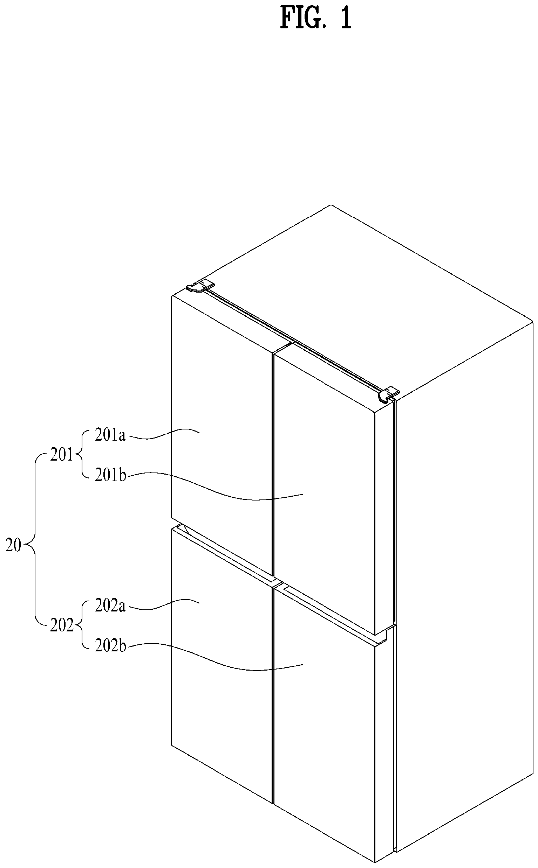

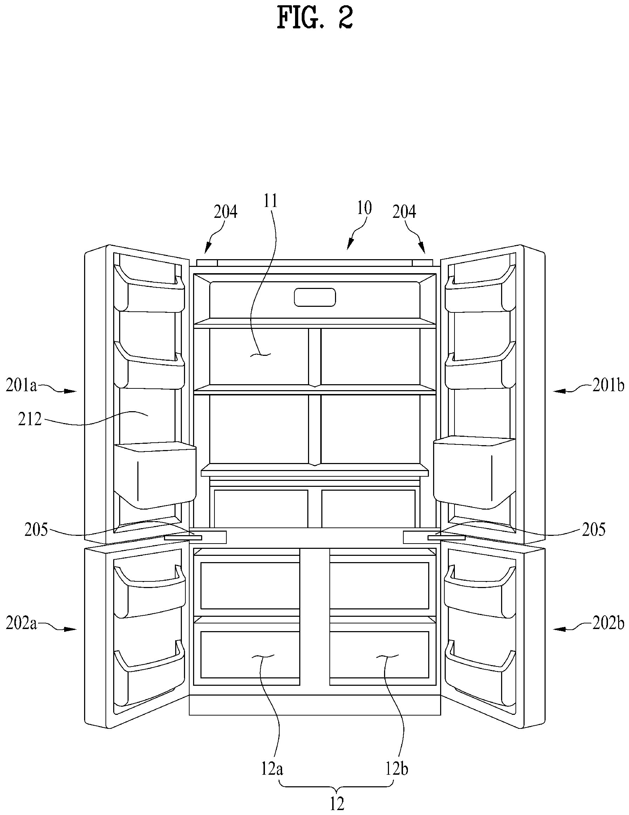

FIG. 1 is a perspective view of a refrigerator according to an embodiment of the present disclosure, and FIG. 2 is a front view with an open door of a refrigerator. Hereinafter, descriptions duplicate with those of the above drawings will be omitted.

Referring to FIG. 1, a refrigerator 1 according to an embodiment of the present disclosure can include a cabinet 10 for defining therein a storage space (or a storage section), and a door 20 that opens and closes the storage space of the cabinet 10.

In one embodiment, the cabinet 10 can define the storage space partitioned in a vertical direction, a refrigeration compartment can be defined at an upper portion of the storage space, and a freezer compartment can be defined at a lower portion of the storage space. The refrigeration compartment can be referred to as an upper storage space and the freezer compartment can be referred to as a lower storage space.

The door 20 can open and close each of the refrigeration compartment and the freezer compartment. In one embodiment, the door 20 can be pivotably mounted to the cabinet 10, and can open and close each of the refrigeration compartment and the freezer compartment by the pivoting. In one example, the door 20 can be constructed to open and close the refrigeration compartment and/or the freezer compartment by entry and exit.

The door 20 can include a refrigeration compartment door 201 for opening and closing the refrigeration compartment and a freezer compartment door 202 for opening and closing the freezer compartment. The refrigeration compartment door 201 can be referred to as an upper door, and the freezer compartment door 202 can be referred to as a lower door.

In the refrigeration compartment door 201, a pair of a left refrigeration compartment door and a right refrigeration compartment door can be arranged side by side. The left refrigeration compartment door and the right refrigeration compartment door can be pivoted independently of each other to open and close the refrigeration compartment. The left refrigeration compartment door and the right refrigeration compartment door can be disposed adjacent to each other and can have the same size.

In the freezer compartment door 202, a pair of a left freezer compartment door and a right freezer compartment door can also be arranged side by side. The left freezer compartment door and the right freezer compartment door can be pivoted independently of each other to open and close the freezer compartment. The left freezer compartment door and the right freezer compartment door can be disposed adjacent to each other and can have the same size.

In one example, in the present embodiment, for convenience of illustration and understanding, a refrigerator of a structure in which the refrigeration compartment is disposed above the freezer compartment is described as an example, but the present disclosure is able to be applied to any type of refrigerator equipped with a door without being limited to a shape of the refrigerator.

In one example, the door 20 can form an outer appearance of a front surface of the refrigerator 1 in a closed state, and can form an outer appearance of the refrigerator 1 viewed from the front in a state in which the refrigerator 1 is installed.

The door 20 can have a structure in which a front surface thereof can selectively emit light, and can be constructed to emit light with a set color or brightness. Accordingly, a user can allow a color or brightness of the front surface of the door 20 to be changed without removing or disassembling the door 20, and can change an overall outer appearance of the refrigerator 1.

Hereinafter, a structure of the door 20 will be described in detail with reference to the drawings.

In one embodiment of the present disclosure, a left refrigeration compartment door 201a and the freezer compartment door 202 have the entirely same structure except that locations and sizes thereof are different from each other. Such doors 201a and 202 can be referred to as panel doors or first doors.

A right refrigeration compartment door 201b can have a structure different from that of the doors 201a and 202, and can have a structure capable of seeing through a rear space, that is, a space in the refrigerator. Accordingly, the right refrigeration compartment door 201b can be referred to as a transparent door, a see-through door, or a second door. Hereinafter, the right refrigeration compartment door 201b will be mainly described.

In addition, in one embodiment, the right refrigeration compartment door 201b can be equipped with an Android-applied display. In this case, the right refrigeration compartment door 201b can correspond to both the transparent door and a display door. In this regard, the right refrigeration compartment door 201b can be referred to as the display door.

In one example, all the doors can be constructed as non-see-through doors (panel doors).

In the present embodiment, the case in which one see-through door is disposed is described as an example, but a plurality of see-through doors can be arranged. In addition, the see-through door can be disposed at a location other than the right refrigeration compartment door 201b.

The right refrigeration compartment door 201b can include a main door and a sub door. The main door can be pivotably mounted to the cabinet 10 and can open and close a refrigeration compartment 11 by the pivoting. The main door can have an opening extending through the main door. The opening can be defined to extend through a remaining portion except for a perimeter of the main door, and at least a portion of the opening can define a portion of the storage space in the refrigerator.

The main door can be equipped with the sub door. The sub door can be pivotably mounted on the main door, and can open and close the opening. In this regard, the sub door can be formed to have the same size as the main door, and an outer appearance of a front surface of the right refrigeration compartment door can be formed by the sub door when viewed from the front.

That is, the sub door can form an outer appearance of a front surface of the right refrigeration compartment door 201b, and can have the same color as the doors 201a and 202 based on an operation of a lighting device 36. The sub door can visualize an interior of the opening or the space inside the refrigerator based on manipulation of the user. To this end, a see-through region can be defined in the sub door. The see-through region can appear selectively, and when the see-through region does not appear, the sub door can emit light of the set color to form the outer appearance of the front surface of the sub door. The see-through region can be variously referred to as a visualizing portion, a see-through window, a window, and the like.

An expiration date of a stored food was able to be recognized using a camera of the refrigerator, and such information was able to be displayed via the display, but there was a problem in that it was difficult to accurately indicate a location or a state of the corresponding food.

Accordingly, in the present disclosure, the exact location and the detailed state can be accurately and intuitively displayed as an LED panel that expresses color via a front surface panel, the camera, and a display panel are in association with each other.

To this end, the present disclosure is to express information related to the refrigerator and the food via the LED panel of the refrigerator to be easily recognized by the user.

In addition, the present disclosure is to effectively view and manage the information and the state of the stored food using the camera, the display panel, and the LED panel mounted on the refrigerator.

In addition, the present disclosure is to propose an optimal location of the food to be received using the camera, the display panel, and the LED panel mounted on the refrigerator.

To this end, the refrigerator of the present disclosure includes at least one panel, and in particular, includes four panels. One of the four panels is equipped with the Android-applied display, and the other three panels have a colored LED lighting-capable structure. Accordingly, the present disclosure is to propose a technology for inputting food information and expiration date information of the food stored in the refrigerator via an internal/external camera or a direct input from the user, and changing a panel color of a corresponding door as the expiration date approaches.

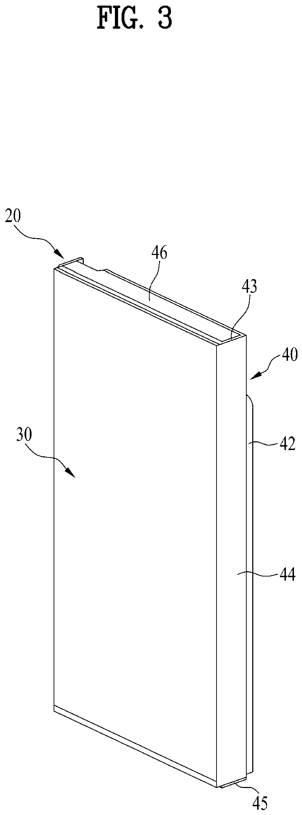

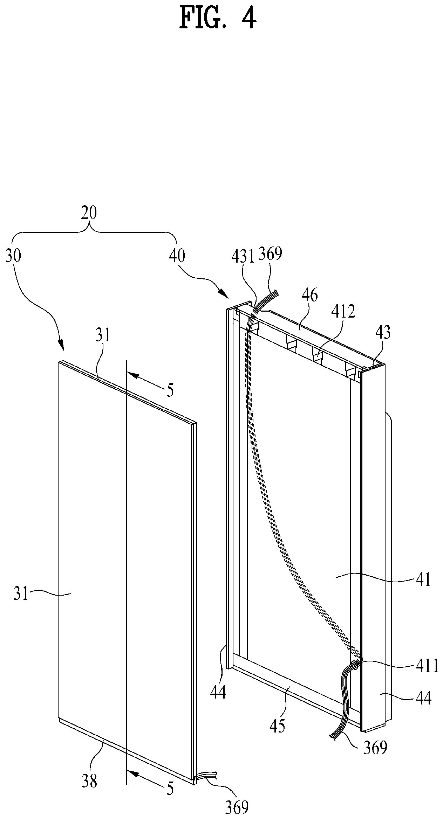

FIG. 3 is a perspective view of a refrigerator door according to an embodiment of the present disclosure, and FIG. 4 is a view showing a state in which a panel assembly is separated from a refrigerator door. Hereinafter, descriptions duplicate with those of the above drawings will be omitted.

Referring to FIGS. 3 and 4, the door 20 can include a door body 40 that forms an overall shape of the door 20, and a panel assembly 30 that forms an outer appearance of a front surface of the door 20. That is, the door 20 can be constructed such that the panel assembly 30 is mounted on a front surface of the door body 40. A mounting portion 412 for mounting the panel assembly 30 can be disposed at an upper end of the front surface of the door body 40.

The door body 40 can include a body plate 41 that forms the front surface thereof, and a door liner 42 that forms a rear surface thereof.

The body plate 41 can be made of, for example, a metal material, and can be formed in a plate shape having a size corresponding to that of the panel assembly 30. The door liner 42 can be made of, for example, a plastic material, and can form a rear surface shape of the door 20.

The door body 40 can further include side decors 44 that form left and right side surfaces of the door body 40. The side decors 44 can connect left and right side ends of the body plate 41 and left and right side ends of the door liner 42 to each other.

The door body 40 can further include an upper cap decor 43 and a lower cap decor 45 that form a top surface and a bottom surface of the door body 40, respectively. The upper cap decor 43 can be connected to upper ends of the side decors 44, an upper end of the body plate 41, and an upper end of the door liner 42. The lower cap decor 45 can be connected to lower ends of the side decors 44, a lower end of the body plate 41, and a lower end of the door liner 42.

The outer appearance of the door body 40 can be formed by the body plate 41, the door liner 42, the side decors 44, the upper cap decor 43, and the lower cap decor 45. A cap decor cover 46 can be coupled to the upper cap decor 43.

A space inside the door body 40 formed by the coupling of the body plate 41, the door liner 42, the side decors 44, the upper cap decor 43, and the lower cap decor 45 can be filled with an insulating material, and can have a structure that can be insulated such that a heat transfer is not achieved via the door 20. The insulating material can be formed, for example, as a foaming liquid is filled and then cured. The door body 40 can have an inlet to be filled with the foaming liquid.

In one example, the panel assembly 30 can be inserted into the front surface of the door body 40 from the front. As an example, the side decors 44 can protrude further forward, and can be in contact with both side ends of the panel assembly 30, respectively.

The panel assembly 30 can be generally formed in a plate shape, and can be formed in a size corresponding to that of the front surface of the door body 40. Therefore, when the panel assembly 30 is mounted on the front surface of the door body 40, the panel assembly 30 can shield the front surface of the door body 40 to form the outer appearance of the front surface of the door 20. Because the panel assembly 30 forms the outer appearance of the front surface of the door 20, the panel assembly 30 can be referred to as a door panel, and because the panel assembly 30 forms the outer appearance of the front surface of the refrigerator 1, the panel assembly 30 can also be referred to as an exterior panel.

In the state in which the panel assembly 30 is mounted on the door body 40, a rear surface of the panel assembly 30 can be closely fixed to the body plate 41. The panel assembly 30 can have a structure detachable from the door body 40 for service and maintenance.

A front surface of the panel assembly 30 can be exposed to the front in the state in which the panel assembly 30 is mounted on the door body 40, and can form a substantial outer appearance of the front surface of the door 20. The panel assembly 30 can be constructed to emit light from an entirety of the front surface thereof, and can be constructed to emit light with various colors.

To this end, the lighting device 36 can be disposed inside the panel assembly 30. The lighting device 36 can be connected to an electric wire 369 for supply and control of power.

The electric wire 369 can be composed of multiple wire-type electric wires, and can be connected to the lighting device of the panel assembly 30.

One end of the electric wire 369 can be connected to the lighting device 36, and the electric wire 369 can be introduced inwardly of the door body 40 through an electric wire hole 411 defined in the front surface of the door body 40, and can be withdrawn to the outside of the door body 40 through a hinge mounting portion 431 at an upper end of the door body 40. The electric wire hole 411 can be opened through the body plate 41.

An upper hinge 204 can be mounted in the hinge mounting portion 431, and the electric wire 369 can be guided to the cabinet 10 via the upper hinge 204 to be connected to a controller 13 disposed in the cabinet 10.

The electric wire 369 can have a structure connected by a connector at a location between the panel assembly 30 and the door body 40. Accordingly, when the panel assembly 30 is detached or mounted from or on the door body 40, the electric wire 369 can be easily connected.

Hereinafter, a structure of the panel assembly 30 will be described in detail with reference to the drawings.

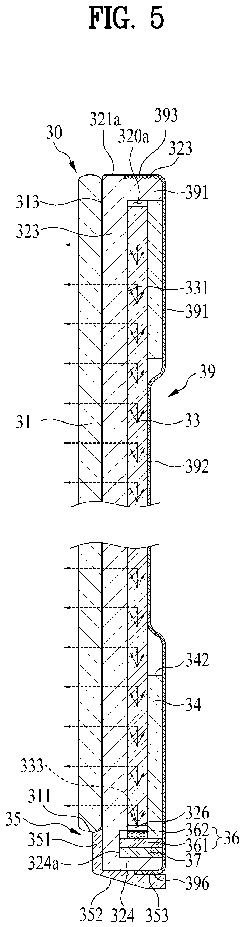

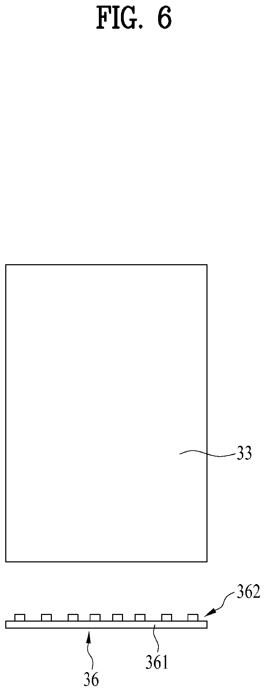

FIG. 5 is a cross-sectional view taken along a line 5-5 in FIG. 4, and FIG. 6 is a view showing an arrangement of a light guide plate and a light source. Hereinafter, descriptions duplicate with those of the above drawings will be omitted.

Referring to FIGS. 5 and 6, the panel assembly 30 can include a front plate 31 forming the outer appearance of the front surface thereof, the lighting device 36 irradiating light such that the front plate 31 emits light, and a light guide plate 33 guiding the light irradiated from the lighting device 36.

The panel assembly 30 can include a diffusing member 32 that allows the light guide plate 33 and the front plate 31 to be spaced apart from each other and diffuses light. The diffusing member 32 can also be referred to as a support member in an aspect that the diffusing member 32 supports the light guide plate 33.

The lighting device 36 and the light guide plate 33 can be mounted in or supported by the diffusing member 32.

The panel assembly 30 can further include a back cover 39 forming a rear surface of the panel assembly 30.

The front plate 31 can be formed in a rectangular plate shape, and can be made of a material capable of transmitting light. For example, the front plate 31 can be made of a glass material, such as blue glass, white glass, and deposited glass, or another material capable of transmitting light, such as ABS, PMMA, PC, and the like. The front plate 31 can be referred to as a transparent plate or an out plate.

The front plate 31 can be formed to be transparent such that light reflected by the light guide plate 33 can be transmitted therethrough. In this regard, transparency can be defined as a degree to which the light reflected from the light guide plate can be transmitted through the front plate 31 and irradiated to the outside.

The front plate 31 can be formed to have a color, and can be formed to exhibit a different color depending on the operation or an on/off state of the lighting device 36. For example, a specific design or pattern can be printed on the front plate 31 to have a specific color. A film printed with the pattern having the specific design or color can be attached to the front plate 31, a surface treatment, such as imprinting, etching, or glass printing, can be performed on the front plate 31, or a coating or deposition layer having a specific color and texture can be formed to form an outer appearance of the front plate 31.

The front plate 31 can be constructed such that the light irradiated from the lighting device 36 is transmitted therethrough but components at the rear of the front plate 31 are not reflected. That is, the front plate 31 can prevent components inside the panel assembly 30 from being seen outside through the front plate 31 by the color of the front plate 31 itself when the lighting device 36 is turned off.

In this regard, the front plate 31 can be formed to have a color that is at least not black and has a brightness equal to or higher than 0 when the lighting device 36 is turned off. That is, in the state in which the refrigerator 1 is installed, the front surface of the refrigerator 1 can exhibit a color other than the black, and the color of the front surface of the refrigerator can be changed based on the operation of the lighting device 36.

In the panel assembly 30, an entirety of the front surface of the front plate 31 can be exposed to the outside. Therefore, because an entirety of the light diffused by the diffusing member 32 can pass through the front plate 31, the entirety of the front surface of the front plate 31 can emit light.

A rear surface of the front plate 31 can be coupled to a front surface of the diffusing member 32.

The light guide plate 33 can be spaced apart from and located at the rear of the front plate 31 by the diffusing member 32, and can guide the light irradiated from the lighting device 36 disposed below the light guide plate 33 to the front.

For example, the light guide plate 33 can be made of a transparent polymer material such as acrylic. In the light guide plate 33, a diffusing agent for diffusing the light incident on the light guide plate 33 can be added, or a pattern for diffusing the light can be formed. Therefore, the light can be transmitted to the front plate 31 by the light guide plate 33. In this regard, the pattern of the light guide plate 33 can be set such that the entirety of the front surface of the front plate 31 can emit light with uniform brightness.

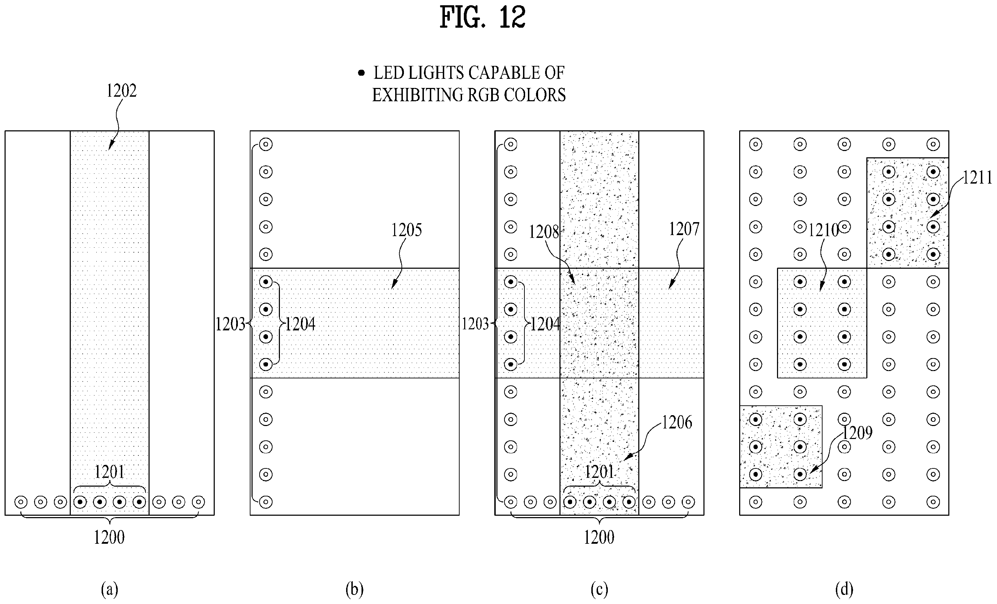

In this regard, various structures of the light guide plate 33 and the lighting device 36 that can be achieved in one embodiment of the present disclosure will be described in detail with reference to FIG. 12 below.

A load of the light guide plate 33 can be supported by the diffusing member 32, and the front surface of the light guide plate 33 can be pressed toward the diffusing member 32 by the back cover 39.

In one example, the diffusing member 32 can be disposed between the front plate 31 and the light guide plate 33. The diffusing member 32 can keep the light guide plate 33 at a certain spacing from the front plate 31, and can diffuse the light irradiated from a light exit surface of the light guide plate 33.

The diffusing member 32 can include a plate-shaped front surface 321 on which the front plate 31 is mounted, and an extended portion extending from a perimeter of the front surface 321. The front surface 321 and the extended portion can define therein an accommodating space 320a for the light guide plate 33 to be located.

The extended portion can be disposed to cover the perimeter of the light guide plate 33. The perimeter of the light guide plate 33 can include, for example, a top surface, a bottom surface, and both side surfaces of the light guide plate 33.

As an example, the extended portion can include an upper extended portion 322 extending from an upper end of a rear surface of the front surface 321, a lower extended portion 324 extending from a lower end of the rear surface of the front surface 321, and a pair of side surfaces extending from both left and right side ends of the front surface 321.

The upper extended portion 322, the lower extended portion 324, and the pair of side surfaces can define therein the accommodating space 320a for the light guide plate 33 to be located. Therefore, the diffusing member 32 can serve to not only diffuse the light, but also to accommodate and support the light guide plate 33 therein.

The front surface 321 can be formed in the plate shape corresponding to the front plate 31, and the front surface of the light guide plate 33 can be in close contact with a rear surface of the front surface 321.

In the present embodiment, because the front surface 321 of the diffusing member 32 is entirely disposed between the front plate 31 and the light guide plate 33, even when the light guide plate 33 is deformed by heat, the light guide plate 33 can be prevented from being in direct contact with the front plate 31. Accordingly, an occurrence of dark areas such as stains on the front plate 31 can be prevented.

The front surface 321 and the rear surface of the front plate 31 can be coupled to each other by an adhesive portion 313. The adhesive portion 313 can include, for example, a sealant or a double-sided tape.

The side surfaces can extend rearwards from the both left and right side ends of the front surface 321 to constrain the left and right side surfaces of the light guide plate 33. The side surfaces can be spaced apart from at least one of the left and right side surfaces of the light guide plate 33. When the light guide plate 33 moves in a left and right direction, the side surfaces can be in contact with and constrain at least one of the left and right side surfaces.

Each of the upper extended portion 322 and the lower extended portion 324 can extend rearwards from the front surface 321, and a length of each of the upper extended portion 322 and the lower extended portion 324 can be greater than a thickness of the light guide plate 33.

The diffusing member 32 can be made of a material capable of transmitting and diffusing the light, and can be formed by being injection-molded or extruded as a single component.

An entirety of the diffusing member 32 can be made of a transparent or translucent material. The diffusing member 32 itself can be formed to have a color. Therefore, when viewing the panel assembly 30 from the front, the color, a texture, or a shape of the front surface of the panel assembly 30 can be determined by the diffusing member 32.

The diffusing member 32 can further include a light guide plate support 326 for supporting a bottom surface 333 of the light guide plate 33. The light guide plate support 326 can extend rearwards from the rear surface of the front surface 321, and can be disposed above the lower extended portion 324 to be spaced apart from the lower extended portion 324.

In order to stably support the load of the light guide plate 33, the diffusing member 32 can include a plurality of light guide plate supports 326. A plurality of light guide plate supports 326 can be arranged to be spaced apart from each other in a horizontal direction.

The diffusing member 32 can accommodate the lighting device 36 therein. The diffusing member 32 can include an accommodating groove (or an accommodating portion) 324a for accommodating a portion of the lighting device 36 therein.

The accommodating groove 324a can be defined as a portion of the rear surface of the front surface 321 is depressed forward. The accommodating groove 324a can be located between the light guide plate support 326 and the lower extended portion 324. Accordingly, when the lighting device 36 is accommodated in the accommodating groove 324a, the lighting device 36 can be located below the light guide plate support 326.

The lighting device 36 can include a substrate 361 and a light source 362. The substrate 361 can be formed in a plate shape, and can be formed long in the left and right direction.

A plurality of light sources 362 can be continuously arranged at a regular spacing on the substrate 361. The light source 362 can be disposed to irradiate light toward the bottom surface 333 of the light guide plate 33. That is, the bottom surface 333 of the light guide plate 33 is a light entrance surface, and a front surface 331 of the light guide plate 33 is the light exit surface.

The substrate 361 can provide a space for the light sources 362 to be continuously arranged from a left end to an opposite end of the light guide plate 33.

The light source 362 can be disposed vertically below the bottom surface 333 of the light guide plate 33, that is, disposed to face the bottom surface 333 of the light guide plate 33.

The light source 362 can be constructed as an LED, for example. The light source 362 can be constructed as an RGB LED capable of irradiating light of various colors under control of a controller 13, which will be described later. That is, the light source 362 can irradiate the light of the various colors under the control of the controller 13, which will be described later, and thus, the front plate 31 can emit the light with the color set by the controller 13. The outer appearance color of the front surface of the refrigerator 1 can be determined based on the color of the front plate 31.

The light source 362 can be constructed as an LED irradiating light of a specific color other than the RGB LED, or can be constructed as a combination of a plurality of LEDs irradiating light of different colors.

For example, the plurality of light sources 362 can be constructed as red, green, and blue LEDs, and can be repeatedly arranged in an order. Under the control of the controller 13, operations of the light sources 362 can be combined with each other to make the front plate 31 emit light of a desired color.

The panel assembly 30 can further include a substrate supporter 37 seated on the lower extended portion 324 of the diffusing member 32.

The substrate supporter 37 can support the substrate 361 in the state of being seated on the lower extended portion 324. The substrate supporter 37 can dissipate heat generated from the lighting device 36 by conduction.

A portion of the substrate supporter 37 can be accommodated in the accommodating groove 324a. The substrate supporter 37 can be in contact with the back cover 39 in a state in which the back cover 39 is assembled. Accordingly, the heat generated from the lighting device 36 can be transferred to the back cover 39 via the substrate supporter 37, and can be dissipated via the back cover 39.

The panel assembly 30 can further include a rear supporter 34 for supporting the rear surface of the light guide plate 33. The rear supporter 34 can be formed in a plate shape and can be attached to the rear surface of the light guide plate 33 by the adhesive portion.

The rear supporter 34 can be made of an opaque material that limits the transmission of light. The rear supporter 34 can be accommodated in the accommodating space 320a defined by the diffusing member 32. The upper extended portion 322 can cover a top surface of the rear supporter 34, and the side surfaces 327 and 328 can cover both side surfaces of the rear supporter 34.

The light irradiated from the light source 362 can be effectively irradiated toward the light guide plate 33, and the light reflected via the light guide plate 33 can make the front plate 31 emit light with a set brightness.

The rear supporter 34 can include an opening 342 through which a portion of the back cover 39 extends. The back cover 39 can include a cover body 391 and a bent portion extending from an edge of the cover body 391 in the horizontal direction.

The cover body 391 can be in contact with a rear surface of the rear supporter 34. The cover body 391 can be attached to the rear supporter 34 by the adhesive portion or can be coupled to the rear supporter 34 by a fastening member such as a screw.

The bent portion can extend from the edge of the cover body 391 forward, and can include an upper bent portion 393, a lower bent portion 396, and a pair of side bent portions. The bent portion can be in contact with the diffusing member 32. The bent portion can be adhered to the extended portion of the diffusing member 32 by the adhesive portion, for example.

For example, the upper bent portion 393 can be seated in an upper seating groove 323 in a depressed shape defined in the upper extended portion 322 of the diffusing member 32.

The lower bent portion 396 can be in contact with a bottom surface of the lower extended portion 324 of the diffusing member 32. The side bent portion can be seated in a side seating groove of the depressed shape defined in the side extended portion.

In the present embodiment, because the diffusing member 32 supports the light guide plate 33 and fixes the location of the light guide plate 33, and the back cover 39 is coupled to surround a portion of the diffusing member 32, the number of parts of the panel assembly 30 itself can be reduced and a thickness in a front and rear direction of the panel assembly 30 can be reduced.

The cover body 391 can further include a pressing portion 392 bent toward the light guide plate 33. The pressing portion 392 can extend through the opening 342 of the rear supporter 34 to be in contact with the rear surface of the light guide plate 33.

In the present embodiment, the cover body 391 can press the rear supporter 34 toward the rear surface of the light guide plate 33 in the state of being in contact with the rear surface of the rear supporter 34, and the pressing portion 392 can directly press the light guide plate 33.

The panel assembly 30 of the present embodiment can further include a lower trim 35. The lower trim 35 can be coupled to the diffusing member 32 by coupling means such as an adhesive portion or a hook.

The lower trim 35 can include a first portion 351 extending in the vertical direction and a second portion 352 extending in the horizontal direction from a lower end of the first portion 351. At least the first portion 351 can be formed to be opaque or translucent, and can be formed to have a specific color when necessary.

The first portion 351 can cover a portion of the diffusing member 32 extending downwardly of the bottom surface 311 of the front plate 31. For example, the first portion 351 can be disposed in front of the accommodating groove 324a of the diffusing member 32 to face the accommodating groove 324a.

The second portion 352 can support the lower extended portion 324. The second portion 352 can include therein a seating groove 393 in which the lower bent portion 396 of the back cover 39 is seated.

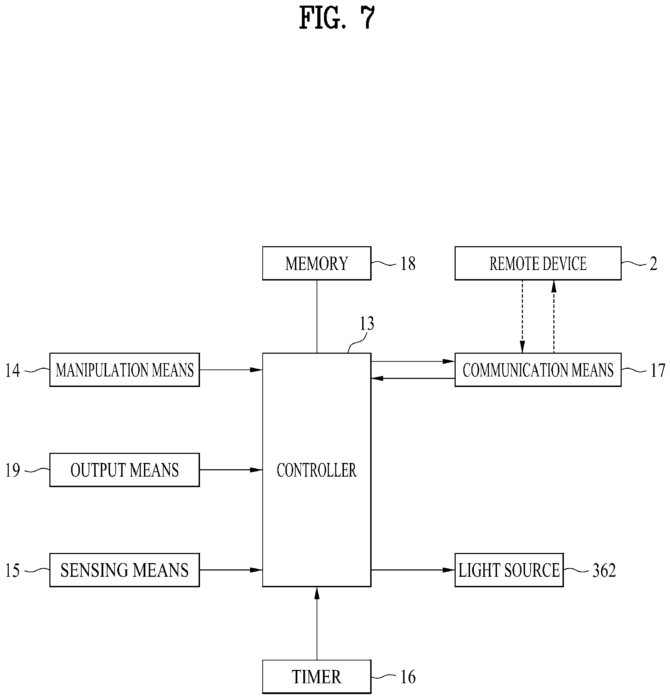

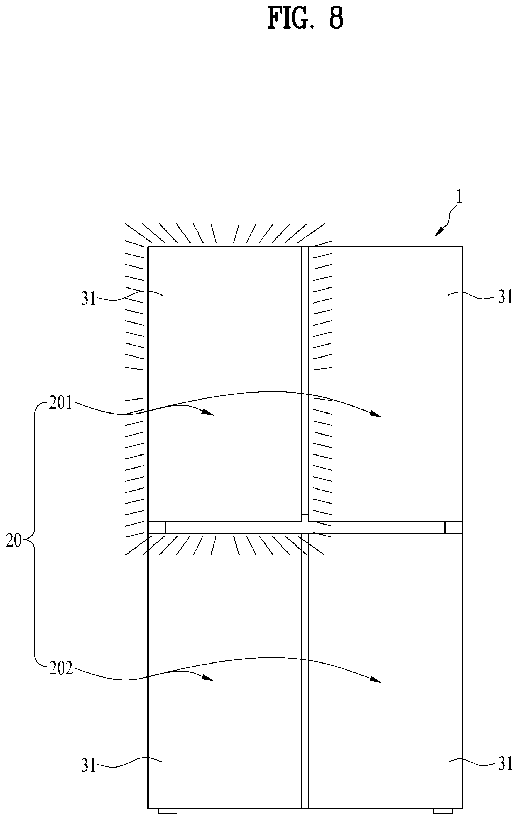

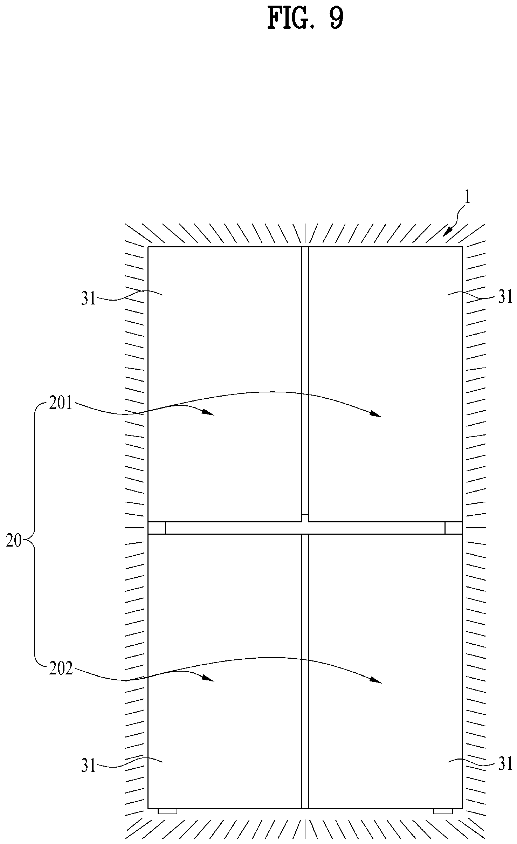

FIG. 7 is a block diagram showing a flow of a control signal of a refrigerator according to an embodiment of the present disclosure, FIG. 8 is a view showing a state in which some of doors are emitting light in a refrigerator according to an embodiment of the present disclosure, and FIG. 9 is a view showing a state in which all of a plurality of doors are emitting light in a refrigerator according to an embodiment of the present disclosure. Hereinafter, descriptions duplicate with those of the above drawings will be omitted.

In the refrigerator 1 according to the embodiment of the present disclosure, the front surface of the door 20 can emit light by the operation of the lighting device 36.

The front surface of the door 20 can emit light with one of a plurality of colors under the control of controller 13. The operation of the lighting device 36 can be achieved via user's manipulation of manipulation means 14. The manipulation means 14 can be disposed at one side of the refrigerator 1, for example, at one side of the cabinet 10. In one example, the manipulation means 14 can be disposed on the door 20 as needed, and can be pressed by manipulation of touching the front plate 31. In other words, the user can set the operation of the lighting device 36 by directly manipulating the manipulation means 14, and can also turn the lighting device 36 on or off.

The user can set an operation state of the lighting device 36, such as an operation time and an operation condition of the lighting device 36, a color of light emitted from the light source 362, and the like, via the manipulation of the manipulation means 14. In addition, various commands related to the operation of the refrigerator can be input via the manipulation of the manipulation means 14. When necessary, the manipulation means 14 can be constructed as a display on which display of information and manipulation are possible.

The operation of the lighting device 36 can be manipulated and the operation condition and the like of the lighting device 36 can be set via a remote device 2 that is spaced apart from the refrigerator 1. The refrigerator 1 can be in communication with the remote device 2 via communication means 17 connected to the controller 13, and the user can control the operation of the lighting device 36 via the remote device 2.

The communication means 17 can be in communication with the remote device 2 and/or a server managing a home appliance in various manners. For example, the communication means 17 can have a structure capable of communicating in at least one of wired, wireless, and short-range communication (BLUETOOTH, Wi-Fi, ZIGBEE, NFC, and the like) manners. The remote device 2 can be various devices capable of communicating, such as a dedicated terminal, a mobile phone, a tablet, a portable PC, a desktop PC, a remote control, and a Bluetooth speaker.

The user can manipulate and set the operation state of the lighting device 36, such as the operation time and the operation condition of the lighting device 36, the color of the light emitted from the light source, and the like, via the manipulation of the remote device 2. For example, easy manipulation and setting can be possible via an application or a dedicated program installed on the user's mobile phone.

The refrigerator 1 can further include a timer 16. The timer 16 can count a time elapsed after an occurrence of a specific event.

In one example, the lighting device 36 can be operated by a result of sensing by the sensing means 15.

The sensing means 15 can include, for example, a user detection sensor that senses proximity of the user. As the user detection sensor, various devices capable of sensing that the user approaches the refrigerator, such as an infrared sensor, an ultrasonic sensor, or a laser sensor, can be used.

The user detection sensor can be disposed at one side of the cabinet 10 or the door 20, and can be disposed at various locations for sensing the proximity of the user. The user detection sensor can include a plurality of sensors located at different locations. Therefore, when the user approaches the refrigerator 1 by a reference distance for use of the refrigerator 1, the user detection sensor can sense the approach, transmit a signal to the controller 13, and allow the lighting device 36 to be turned on. When the user moves away from the refrigerator 1, the user detection sensor can sense the same, transmit a signal to the controller 13, and allow the lighting device 36 to be turned off.

The refrigerator can further include output means 19. The output means 19 can include, for example, a speaker for outputting a sound. Voices, various sounds, or music can be output from the speaker. The output means 19 can be disposed on the door or on the cabinet.

The speaker can be operated by directly communicating with the remote device, and the operation thereof can be controlled by the controller 13. In one example, when describing the operation state of the lighting device operated by the controller 13, as shown in FIG. 6, when the lighting device 36 is turned on in response to instruction of the controller 13, the light irradiated from the light source 362 can be irradiated to the bottom surface 333 of the light guide plate 33, and can be guided along the light guide plate 33.

In this regard, the light guided by the light guide plate 33 can pass through the light exit surface, diffuse through the front surface 321, and then pass through the front plate 31 to be transmitted to the outside. Accordingly, an entirety of the front plate 31 can brightly emit light, and the front surface of the door 20 can emit light with the set brightness or color.

When the lighting device 36 is turned on, the front surface of the door 20 can brightly emit light, and the front surface of the door 20 can emit light with the set color by the light irradiated from the light source 362. In this regard, the color of the front surface of the door 20 can be different in color or brightness from a color in the state in which the lighting device 36 is turned off.

That is, the color of the front plate 31 can be seen as the color of the front surface of the door 20, and a texture and a pattern formed on the front plate 31 can be seen. In this regard, the color of the front plate 31 can be a color with a brightness higher than 0, and can be a color other than the black. The color of the front surface of the door 20 in the state in which the lighting device 36 is turned off can be referred to as a first color (or a background color).

Therefore, the front surface of the door 20 will be seen with the color of the front plate 31. In this regard, because of the color of the front plate 31, components inside the panel assembly 30 are not be seen from the outside through the front plate 31.

In such state, the lighting device 36 can be turned on. When the lighting device 36 is turned on, the front surface of the door 20 will emit light with the color set by the controller 13.

The front surface of the door 20 can be controlled to emit light with a second color different from the first color, and the lighting device 36 can control the light source 362 such that the door 20 can emit light with the second color under the control of the controller 13.

In this regard, a color of the light irradiated from the light source 362 can be different from the second color. That is, because the front plate 31 has the first color, when the light of the second color is irradiated from the light source 362, the light can interact with the first color in the process of passing through the front plate 31, so that the door 20 can actually emit light with a third color.

Therefore, in the present embodiment, controlling the light source 362 such that the door 20 emits light with a specific color can mean controlling the color of the light irradiated from the light source 362 in consideration of the color of the front plate 31 itself.

That is, in the state in which the light source 362 is turned on, the color of the light emitted from the door 20 can be a color in which the color of the front plate 31 itself and the color of the light irradiated from the light source 362 are mixed with each other.

In one example, some doors 20 among the plurality of doors 20 forming the outer appearance of the front surface of the refrigerator 1 can emit light, or the plurality of door 20 can independently emit light to form the outer appearance of the front surface of the refrigerator 1 with the set color.

The refrigerator 1 can be operated such that some doors 20 of the plurality of doors emit light or emit light with a specific color. That is, the lighting devices 36 arranged in the doors 20 may not all be operated, but only some of the entire doors 20 can emit light. For example, one of the refrigeration compartment doors 201 can emit light.

The left refrigeration compartment door and the right refrigeration compartment door can emit light in different colors as required. At least two doors 20 among the doors 20 can be sequentially changed in color, and at least two doors 20 can be sequentially turned on and off.

In this regard, the lighting device 36 disposed in the panel assembly 30 can be controlled by the controller 13 under the various conditions described above.

In one example, the refrigeration compartment door and the freezer compartment door among the doors can be controlled to emit light in different colors.

The controller 13 can control the lighting devices 36 such that the pair of refrigeration compartment doors 201 are seen in the first color. The controller 13 can control the lighting devices 36 such that the pair of refrigeration compartment doors 201 are seen in the second color.

In one example, operation control of the lighting device 36 to be described below is not limited to the structure of the panel assembly or the structure of the door described above. That is, at least one of the plurality of components constituting the panel assembly can be omitted, at least one of the plurality of components can be replaced with another component, or a location of at least one component of the plurality of components can be changed.

Herein, the change in the state of the light source 362 can include at least one of the change in the state of the light source 362 from the off state to the on state, the change in the state of the light source 362 from the on state to the off state, one or more LEDs being turned on from the state in which the light source 362 is turned off, the light source 362 being turned off from the state in which the one or more LEDs are turned on, a change in brightness of the light irradiated from the light source 362 in the state in which the light source 362 is turned on, a change in brightness or color of light irradiated from some of the plurality of LEDs in the state in which the light source 362 is turned on, a change in the number of LEDs that are turned on (an increase in the number of LEDs that are turned on or a decrease in the number of LEDs that are turned on), and a change in the color of the light irradiated from the light source 362 in the state in which the light source 362 is turned on.

The state in which the light source 362 is turned on means a state in which all of the plurality of LEDs are turned on, and the state in which the light source 362 is turned off means a state in which all of the plurality of LEDs are turned off.

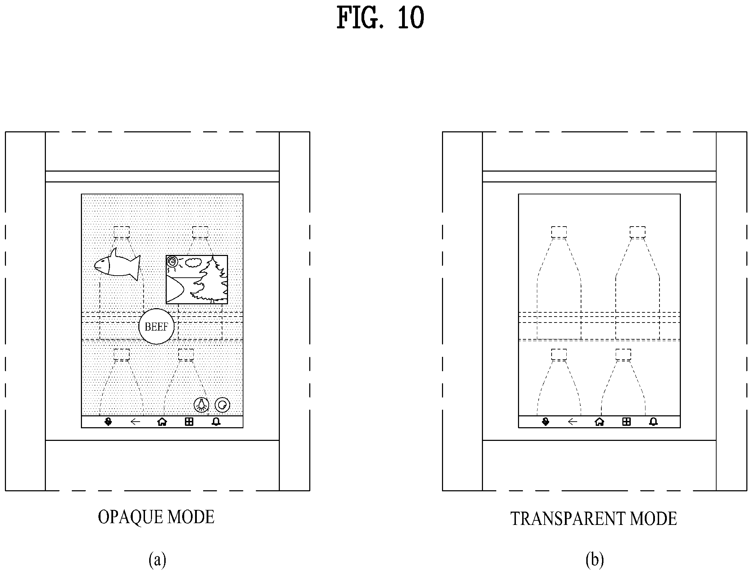

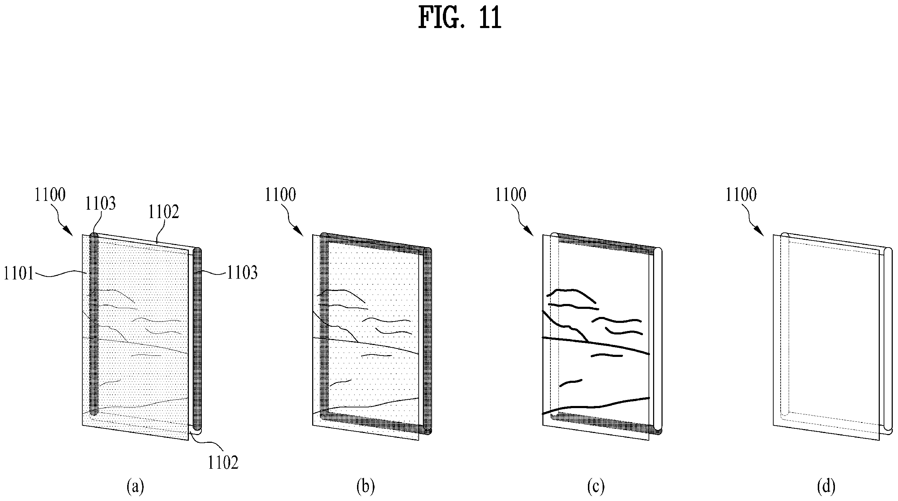

FIGS. 10 and 11 are views for illustrating a display door having a transparent display panel according to an embodiment of the present disclosure. Hereinafter, descriptions duplicate with those of the above drawings will be omitted.

As described above in FIGS. 1 and 2, the right refrigeration compartment door 201b of the refrigerator can be equipped with the Android-applied display, and the Android-applied display can use a transparent display panel that can switch between a transparent mode, a translucent mode, and an opaque mode.

A left view in FIG. 10 shows an embodiment in which the display panel included in the display door operates in the opaque mode, and a right view in FIG. 10 shows an embodiment in which the display panel included in the display door operates in the transparent mode.

When the display panel operates in the opaque mode as shown in the left view in FIG. 10, because the display door is operated with the Android-applied display, various user interfaces can be output on the display panel.

On the other hand, when the display panel operates in the transparent mode as shown in the right view in FIG. 10, the user can check the inside of the refrigerator through the display door.

(a) in FIG. 11 is a view illustrating the transparent mode, (b) in FIG. 11 is a view illustrating the translucent mode, (c) in FIG. 11 is a view illustrating the opaque mode, and (d) in FIG. 11 is a view illustrating a light off mode.

A display panel 1100 in FIG. 11 can include an outermost LCD panel 1101, an LCD backlight module 1102, and an internal LED 1103. In this regard, the LCD backlight module 1102 can be located at the rear of the LCD panel 1101 and emit light. In addition, although the internal LED 1103 in FIG. 11 is shown as being located at each of both left and right side ends of the display panel 1100, this is only an example. The internal LED 1103 can be shown differently in subsequent drawings.

In order to operate in the transparent mode as shown in (a) in FIG. 11, the display panel 1100 can turn on only the internal LED 1103.

In addition, in order to operate in the translucent mode as shown in (b) in FIG. 11, the display panel 1100 can turn on both the LCD backlight module 1102 and the internal LED 1103. In this regard, the display panel 1100 can execute the translucent mode via brightness adjustment of the LCD backlight module 1102 and the internal LED 1103.

In addition, in order to operate in the opaque mode as shown in (c) in FIG. 11, the display panel 1100 can turn on only the LCD backlight module 1102.

Lastly, in order to operate in the light off mode as shown in (d) in FIG. 11, the display panel 1100 can turn off both the LCD backlight module 1102 and the internal LED 1103. Accordingly, an image being output on the display panel 110 becomes almost invisible.

FIG. 12 is a view for illustrating locations of a light guide plate and a light source of an LED door according to an embodiment of the present disclosure. Hereinafter, descriptions duplicate with those of the above drawings will be omitted.

(a) to (d) in FIG. 12 are views showing a front surface of a door equipped with light sources among the doors of the refrigerator described above. In particular, (a) to (d) in FIG. 12 show a door with different locations of the light sources. In this regard, (a) to (d) in FIG. 12 mainly illustrate an arrangement of the light sources. The front plate, the light guide plate, and the like will be omitted because it has been described above in FIG. 6 that the front plate, the light guide plate, and the like are naturally included to guide the light output from the light source.

More specifically, (a) in FIG. 12 shows an embodiment in which the light sources are located at a lower edge, (b) in FIG. 12 shows an embodiment in which the light source are located at a side edge, (c) in FIG. 12 shows an embodiment in which the light sources are located at the lower and side edges, and (d) in FIG. 12 shows an embodiment in which the light sources are located perpendicular to the front plate of the door. In this regard, the locations of the light sources are merely an example, and the light sources can be located at an upper edge or at a right side.

Accordingly, because the light sources are located at the lower edge in (a) in FIG. 12, when the light is irradiated from the light sources, the light guide plate can transmit the light irradiated from in an upward direction to the front plate. In this regard, as shown in (a) in FIG. 12, the controller of the refrigerator can turn on only some light sources 1201 among a plurality of light sources 1200 arranged at the lower edge. In this case, from a user's point of view, only a first region 1202 is seen in the first color, not the light is emitted from the door front surface.

Similarly, in (b) in FIG. 12, because the light sources are located at the side edge, when the light is irradiated from the light sources, the light guide plate can transmit the light irradiated in a rightward direction to the front plate. Similarly, as shown in (b) in FIG. 12, the controller of the refrigerator can turn on only some light sources 1204 among a plurality of light sources 1203 arranged at the left side. In this case, from the user's point of view, only a second region 1205 is seen in the second color, not the light is emitted from the door front surface.

When the light sources are located at both the lower edge and the left side edge, as shown in (c) in FIG. 12, both the embodiments in (a) and (b) in FIG. 12 can be included. In one embodiment, the controller of the refrigerator can allow some light sources 1201 of the light sources 1200 located at the lower edge and some light sources 1204 of the light sources 1203 located at the left side to emit light of different colors. In this case, from the user's point of view, it appears that different colors are output from a third region 1206, a fourth region 1207, and a fifth region 1208.

Finally, as shown in (d) in FIG. 12, the light sources can be located perpendicular to the front plate. That is, the light sources are not located at the bottom or the side of the door to irradiate light in an x-axis direction or a y-axis direction, but are located perpendicular to the door to irradiate light in a z-axis direction. This can be referred to as a direct-type structure.

In one embodiment, the controller of the refrigerator can output different colors from a sixth region 1209, a seventh region 1210, and an eighth region 1211 by individually controlling the light sources located on the front surface of the door. Accordingly, the user can see that the different colors are output from the sixth region 1209, the seventh region 1210, and the eighth region 1211.

In addition, the light sources shown in (a) to (d) in FIG. 12 are the LED light that can represent RGB colors.

Therefore, the refrigerator according to an embodiment of the present disclosure can achieve various lighting effects based on the arrangement of the light sources. In addition, there is an advantage that various information related to the refrigerator can be displayed by utilizing the same. Hereinafter, an embodiment for displaying the various information will be described in detail.

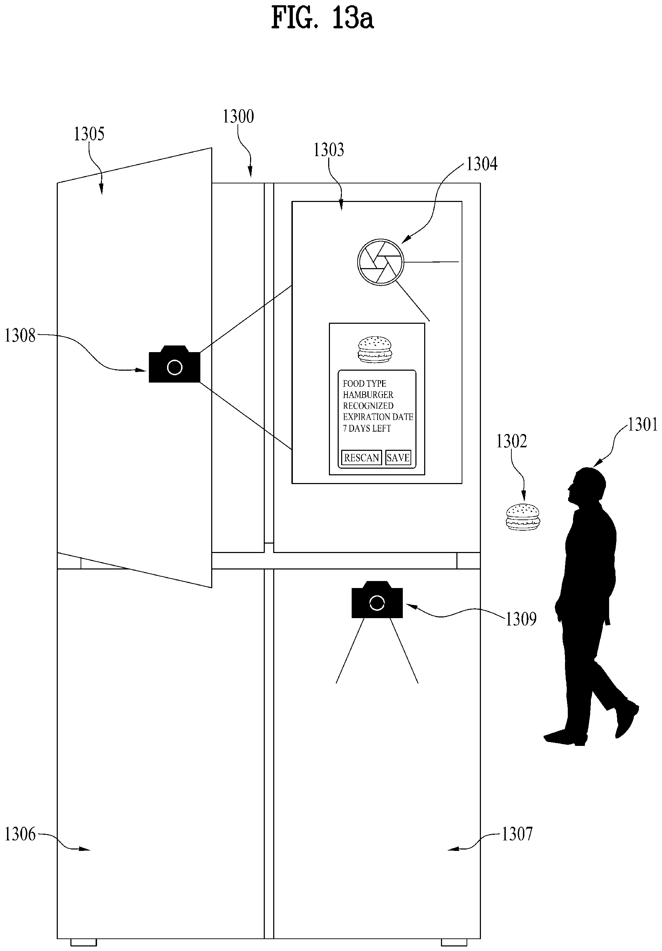

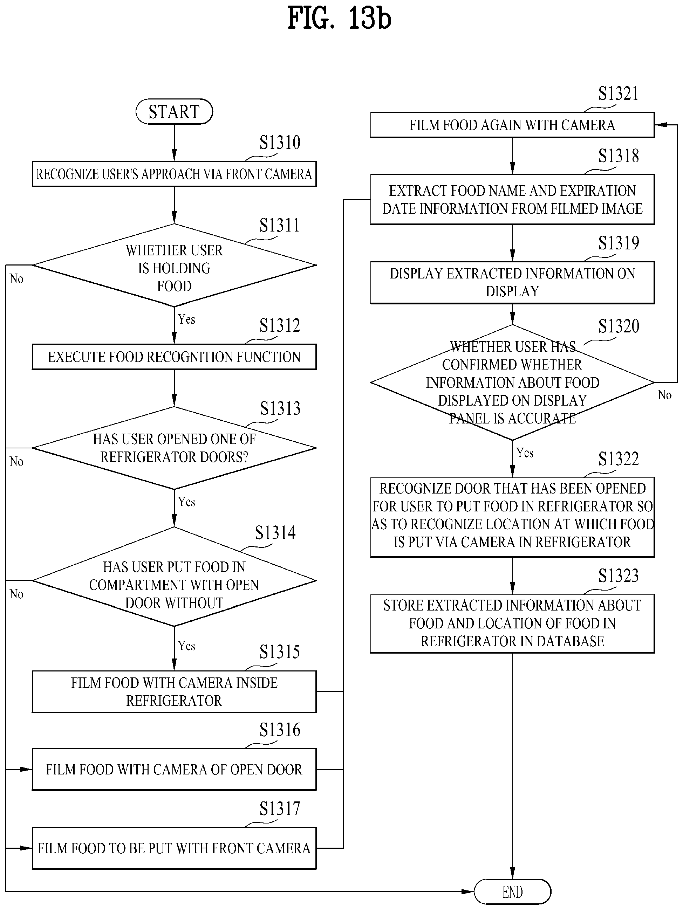

FIGS. 13a and 13b are views for illustrating a method for recognizing food in a refrigerator according to an embodiment of the present disclosure. Hereinafter, descriptions duplicate with those of the above drawings will be omitted.

That is, in order to display the various information related to the refrigerator by changing the color of the LED door according to the above-described embodiment, the refrigerator needs to first recognize information about food stored in the refrigerator.

FIG. 13a shows a scene of use by an actual user, and FIG. 13B shows a flowchart for recognizing the food in the refrigerator.

Referring to FIG. 13a, a user 1301 can approach a refrigerator 1300 holding food 1302. In one embodiment, a display door 1303, which is an upper right door of the refrigerator, can include a front camera 1304. The front camera 1304 can sense that the user 1301 approaches the refrigerator 1300 with the food 1302.

In one embodiment of the present disclosure, the refrigerator 1300 can include the front camera 1304 on the display door 1303, and at least one of a first door 1305, a second door 1306, and a third door 1307 can include a camera 1308 and can include an internal camera 1309 that films an interior of the refrigerator.

In this regard, the refrigerator 1300 can include a camera for filming the food. At least one camera can be included in the display door 1303, the first door 1305, the second door 1306, the third door 1307, and the refrigerator 1300.

That is, in the embodiment in FIG. 13a, the front camera 1304 disposed on the display door 103, the door camera 1308 disposed on the first door 1305, and the internal camera 1309 disposed in a refrigerator compartment corresponding to the third door 1307 are shown, but this is only an option. A camera for filming the food can be optionally disposed.

Thereafter, the refrigerator according to an embodiment of the present disclosure can recognize the food based on a flow in FIG. 13b.

Referring to FIG. 13b, in operation (S1310), the refrigerator can recognize the user's approach via the front camera disposed on the display door.

In operation (S1311), the refrigerator can determine whether the user is holding the food in an image recognized via the front camera. In this regard, the display door of the refrigerator can include the front camera. In this regard, when the user is not holding the food, the flow ends.

When the user is holding the food in the image recognized via the camera, in operation (S1312), the refrigerator can execute a food recognition function via the display door.

In operation (S1313), the refrigerator can determine whether the user has opened one of the refrigerator doors. The refrigerator according to one embodiment of the present disclosure can include the Android-applied display door and three LED doors having the LEDs as the light sources. The refrigerator can determine which door among the display door, the first door, the second door, and the third door the user has opened.

When the user has not opened the refrigerator door, operation (S1317) can be performed.

When the user opens the refrigerator door, in operation (S1314), whether the user has put the food in the refrigerator compartment with the open door without the food recognition and then closed the door can be identified.

When the user has put the food into the refrigerator compartment with the open door without the food recognition and then closed the door, in operation (S1315), the food can be filmed via the camera in the refrigerator of the corresponding refrigerator compartment.

When the user has put the food in the refrigerator compartment with the open door without the food recognition and then has not closed the door, in operation (S1316), the food can be filmed via the camera of the open door. That is, in one embodiment of the present disclosure, not only the display door can be equipped with the front camera to identify whether the user is approaching, whether the user is holding the food, and information about the food, but also each door is equipped with a camera capable of filming the food while the door is opened, and the camera is also disposed inside the refrigerator to film the food in the refrigerator.

In operation (S1317), when the user has not opened the refrigerator door, the refrigerator can film the food the user is holding with the front camera.

When the food is filmed through operation (S1315) to operation (S1317), in operation (S1318), the refrigerator can extract the information about the food from the filmed image. In this regard, the information about the food can include a name of the food and expiration date information of the food.

In operation (S1319), the refrigerator can display the extracted information about the food on the display panel of the display door. Thereafter, the refrigerator can receive a user input on whether the information about the food displayed on the display panel is accurate from the user.

In operation (S1320), when the user confirms that the information about the food displayed on the display panel is accurate, operation (S1322) is performed, and when the user confirms that the information is not accurate, operation (S1321) can be performed.

When the user confirms that the information is not accurate, in operation (S1321), the food can be filmed again with the camera. In this regard, the food can be filmed via the camera in operation (S1315) to operation (S1317).

In addition, when the user determines that the information about the food is not accurate even though operation (S1320) and operation (S1321) are repeatedly performed, the user can directly input the information about the food via the display panel.

When the user confirms that the information about the food output on the display panel is accurate, in operation (S1322), the door that has been opened for the user to put the food in the refrigerator can be recognized, so that a location at which the food is put can be recognized via the camera in the refrigerator of the corresponding door.

In operation (S1323), the information about the food and the location of the food in the refrigerator can be stored in a database of the food.

An embodiment to be described later can be illustrated based on the information about the food and the location of the food in the refrigerator recognized through FIGS. 13a and 13b.

The present disclosure provides an interface that allows the user to set a color of the refrigerator door to a desired color or a color that is appropriate for a situation or an event via a light source.

That is, the refrigerator may change the color by linking a face recognition function of an Android OS installed on the display door, weather application information, and the like to the door with the light source.

Accordingly, when changing the color of the door, the user is able to set the color directly via the display door of the refrigerator without a separate mobile device.

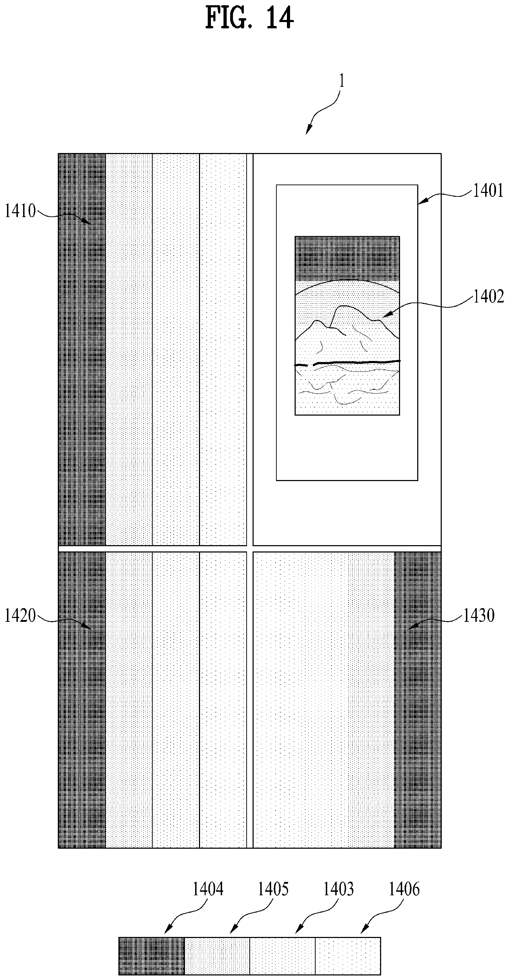

Hereinafter, an embodiment of the present disclosure will be described in detail via FIGS. 14 to 23.

FIG. 14 is a view illustrating an embodiment of changing a color of a door based on a background screen of a display door in a refrigerator according to an embodiment of the present disclosure. Hereinafter, any content that is redundant with the above description will be omitted.

Referring to FIG. 14, a refrigerator 1 may extract a representative color from a background screen 1402 being output on the display panel 1401.

More specifically, a display door of the refrigerator 1 may include the display panel 1401 equipped with an Android OS. Accordingly, the display panel 1401 may output the background screen 1402. Here, the background screen 1402 may be set by the user or received from an external source.

In this regard, the refrigerator 1 may extract a representative color 1403 from the background screen 1402. In an embodiment, the representative color 1403 may correspond to a most used color in the background screen 1402. In addition, the refrigerator 1 may extract the representative color 1403 from the background screen 1402 using a unique function (a dynamic color function) of the Android OS.

Thereafter, the refrigerator 1 may generate at least one color 1404, 1405, and 1406 related to the extracted representative color 1403. In an embodiment, the refrigerator 1 may generate the at least one color 1404, 1405, and 1406 similar to the extracted representative color 1403. In this regard, the refrigerator 1 may use an RGB color table, a CMYK color table, and the like. For example, when an RGB code value of the representative color is "#40CDF7", "#3565FC", "#2F88E0", and "#2FE0DB" may be generated as the similar colors. Because a technology of extracting at least one similar color from one color is a well-known technology, a description thereof will be omitted.

In an embodiment, the refrigerator 1 may output the generated at least one color 1404, 1405, and 1406 on a first door 1410, a second door 1420, and a third door 1430.

More specifically, the refrigerator 1 may extract the representative color 1403 via the background screen 1402, and generate the similar colors 1404, 1405, and 1406 to be output on the first door 1410, the second door 1420, and the third door 1430 based on the representative color 1403. Accordingly, the refrigerator 1 may output a first color 1404, a second color 1405, and a third color 1406 on the first door 1410, the second door 1420, and the third door 1430, respectively. In this regard, the refrigerator 1 may change the colors of the first door 1410, the second door 1420, and the third door 1430 by irradiating light from an LED light source using the RGB code values described above. This is as described above.

In addition, in an embodiment, the refrigerator 1 may output the first color to the third color 1404, 1405, and 1406 on the first door 1410, the second door 1420, and the third door 1430 in combination. That is, according to the embodiment described above, the present disclosure may change a color of a partial area of the door using an edge structure or downward-directed structure light source. Accordingly, the refrigerator 1 may output the first color to the third color 1404, 1405, and 1406 on the first door 1410 to the third door 1430 in combination.

That is, the user may feel a sense of stability via a color change of the first door 1410, the second door 1420, and the third door 1430 of the refrigerator 1 to a color that gives a similar feeling to the background screen 1402 set directly by the user or the background screen 1402 received from a server or the like.

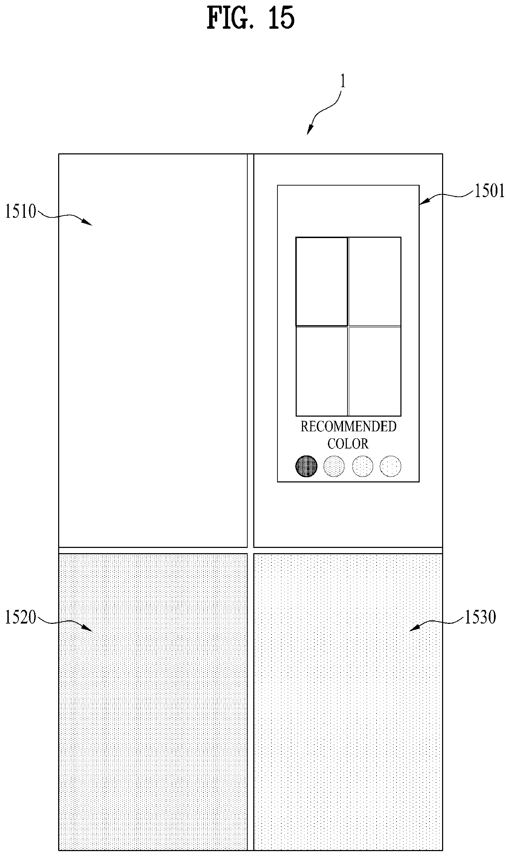

FIG. 15 is a view illustrating an embodiment of selecting a color of a door by a user via a display door in a refrigerator according to an embodiment of the present disclosure. Hereinafter, any content that is redundant with the above description will be omitted.

Referring to FIG. 15, the refrigerator 1 may receive a first color from the user via a display panel 1501.

More specifically, the refrigerator 1 may output a user interface representing the refrigerator 1 on the display panel 1501. Here, the user interface may provide an interface that may receive a shape and a color representing the refrigerator 1. Accordingly, the user may select the first color among at least one color being output on the display panel 1501.

The refrigerator 1 may generate a second color and a third color corresponding to the first color selected by the user. That is, when the first color is selected, the refrigerator 1 may recommend the second color and the third color that match the first color. A process of generating the second color and the third color corresponding to the first color is as described above in FIG. 14. Although not illustrated in the drawing, the refrigerator 1 may further perform a step of getting a user's confirmation on the first color to the third color.

Thereafter, the refrigerator 1 may output the first color, the second color, and the third color on a first door 1510, a second door 1520, and a third door 1530, respectively.

In another embodiment, the refrigerator 1 may receive the first color of the first door 1510, the second color of the second door 1520, and the third color of the third door 1530 from the user via the display panel 1501. In this regard, the refrigerator 1 may store the input first color, second color, and third color in a database. Thereafter, the refrigerator 1 may recommend a preferred color to the user via the display panel 1501 based on the color input in the database.

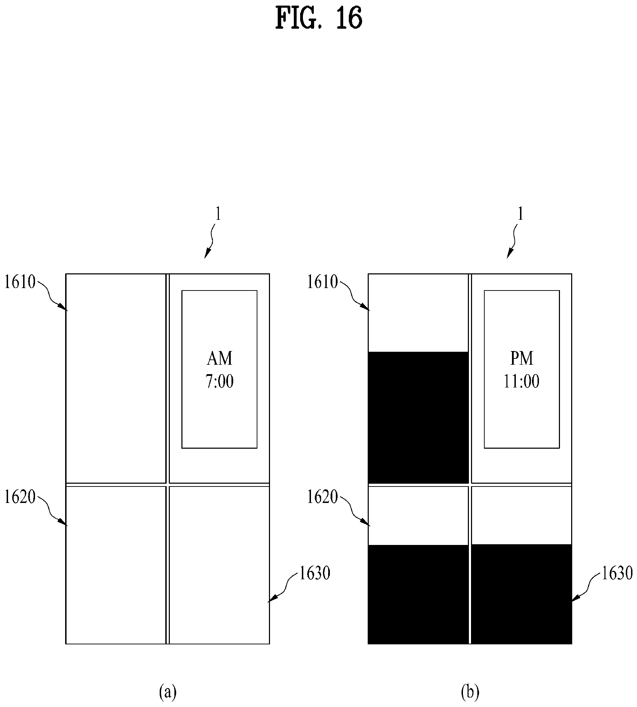

FIG. 16 is a view illustrating an embodiment of changing a color of a door based on time in a refrigerator according to an embodiment of the present disclosure. Hereinafter, any content that is redundant with the above description will be omitted.

Referring to FIG. 16, the refrigerator 1 may change colors of a first door 1610, a second door 1620, and a third door 1630 based on time.

More specifically, the display door of the refrigerator 1 includes the display panel equipped with the Android OS. That is, the refrigerator 1 may output a clock application or the like via the display panel.

In an embodiment of the present disclosure, the refrigerator 1 may change the colors of the first door 1610, the second door 1620, and the third door 1630 based on at least one of time information and illuminance information received via the clock application.

Specifically, the refrigerator 1 may categorize the time into morning hours (e.g., from 7:00 a.m. to 12:00 a.m.) and evening hours (e.g., from 7:00 p.m. to 12:00 a.m.). In this regard, when current time received via the clock application is within the morning hours, the refrigerator 1 may output light colors on the first door 1610, the second door 1620, and the third door 1630, as in (a) in FIG. 16.

On the other hand, when the current time received from the clock application is within the evening hours, the refrigerator 1 may output dark colors on the first door 1610, the second door 1620, and the third door 1630, as in (b) in FIG. 16.

In addition, the refrigerator 1 may include an illuminance sensor. Accordingly, the refrigerator 1 may sense an ambient illuminance. In an embodiment, the refrigerator 1 may change the colors of the first door 1610, the second door 1620, and the third door 1630 based on the sensed illuminance.

For example, the refrigerator 1 may allow brightness of the first door 1610, the second door 1620, and the third door 1630 to be equal to or smaller than 1 lux (Lx) when the sensed illuminance is equal to or smaller than 1 lux. Similarly, the refrigerator 1 may allow the brightness of the first door 1610, the second door 1620, and the third door 1630 to be equal to or greater than 2 lux when the sensed illuminance is equal to or greater than 2 lux.

In addition, the refrigerator 1 may automatically adjust the colors and the brightness of the first door 1610, the second door 1620, and the third door 1630 in real time based on the time information and the illuminance information described above.

Accordingly, when the user looks at the refrigerator 1 at night, the user may not be dazzled by the bright color of the door, and may check the color of the door that is naturally in harmony with the surroundings.

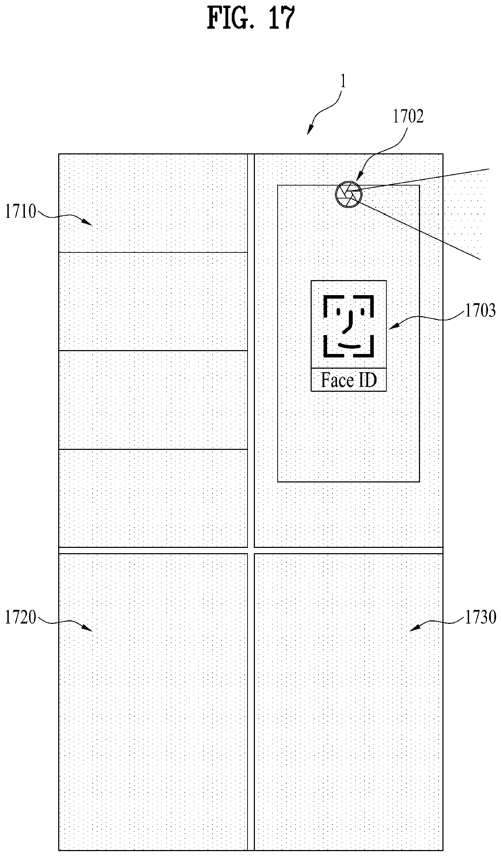

FIG. 17 is a view illustrating an embodiment of changing a color of a door based on face information of a user recognized via a camera in a refrigerator according to an embodiment of the present disclosure. Hereinafter, any content that is redundant with the above description will be omitted.

Referring to FIG. 17, the refrigerator 1 may include a front camera 1702 on the display door. The refrigerator 1 may recognize a user's face via the front camera 1702, and analyze the face to generate face information 1703.

In an embodiment, the refrigerator 1 may change colors of a first door 1710, a second door 1720, and a third door 1730 based on the face information 1703.

More specifically, the refrigerator 1 may recognize the user's face via the front camera 1702. Here, the recognized user's face may include both a face that is pre-registered and a face that is not registered in the refrigerator 1. In addition, the refrigerator 1 may recognize the user's face by activating the front camera 1702 when the user is sensed within a preset range of the front camera 1702.

Thereafter, the refrigerator 1 may analyze the recognized user's face. For example, the refrigerator 1 may analyze the recognized user's face by utilizing the face recognition function included in the Android OS. For example, the refrigerator 1 may analyze whether the user is smiling, expressionless, or sad.

In an embodiment, the refrigerator 1 may change the colors of the first door 1710, the second door 1720, and the third door 1730 based on the analyzed face information 1703 of the user. In this regard, the refrigerator 1 may change the colors of the first door 1710, the second door 1720, and the third door 1730 to colors that may uplift user's mood based on the analyzed face information 1703.

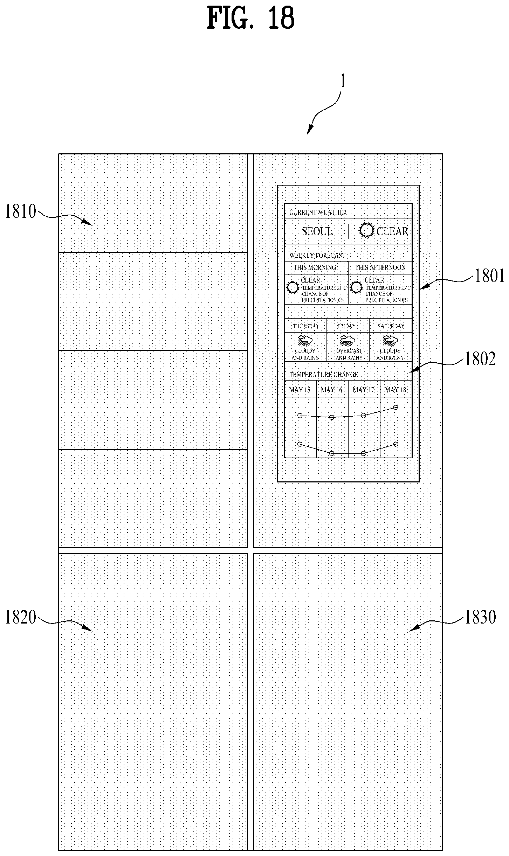

FIG. 18 is a view illustrating an embodiment of changing a color of a door based on weather information in a refrigerator according to an embodiment of the present disclosure. Hereinafter, any content that is redundant with the above description will be omitted.

Referring to FIG. 18, the refrigerator 1 may execute a weather application 1802 via a display panel 1801. In an embodiment, the refrigerator 1 may change colors of a first door 1810, a second door 1820, and a third door 1830 based on weather information received from the weather application 1802. Here, the weather information may include a current temperature, an air quality, a UV index, a sunrise time, a sunset time, a wind speed, a rainfall, a humidity, a distance of visibility, and the like.

For example, when it's sunrise, the refrigerator 1 may change the colors of the first door 1810, the second door 1820, and the third door 1830 to yellow. In addition, the refrigerator 1 may change the colors of the first door 1810, the second door 1820, and the third door 1830 to dark blue on a rainy day. In addition, the refrigerator 1 may change the colors of the first door 1810, the second door 1820, and the third door 1830 to light green when it is clear and the temperature is equal to or higher than 25 degrees.

As such, the refrigerator 1 may provide color therapy that matches the day or uplifts mood of the day via emotional weather by changing the colors of the first door 1810, the second door 1820, and the third door 1830.

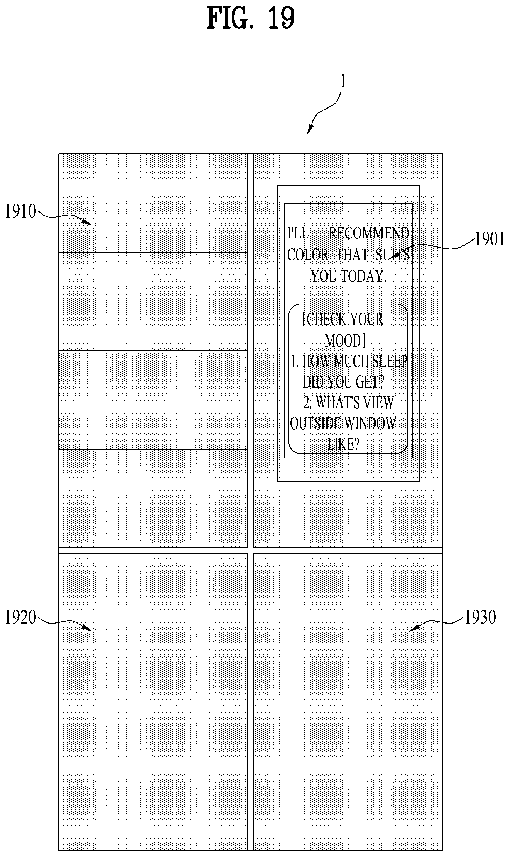

FIG. 19 is a view illustrating an embodiment of changing a color of a door based on input information in a refrigerator according to an embodiment of the present disclosure. Hereinafter, any content that is redundant with the above description will be omitted.

Referring to FIG. 19, the refrigerator 1 may output at least one question on a display panel 1901. Here, the at least one question corresponds to a question for identifying user's mood of the day. For example, the refrigerator 1 may output a question for identifying the mood, such as "How much did you sleep?" and "How many times did you enjoy the scenery outside the window?".

Thereafter, the refrigerator 1 may receive a user's answer via the display panel 1901. The refrigerator 1 may change colors of a first door 1910, a second door 1920, and a third door 1930 based on the user's answer. In this regard, the refrigerator 1 may receive question and answer examples from an external server and output them via the display panel 1901.

When the user's answer to the question indicates "lethargy", the refrigerator 1 may output red on the first door 1910, the second door 1920, and the third door 1930. The red is known to help with external activities, blood circulation, and appetite.

Because the color is light that the user sees with one of the five senses, sight, the color has an ability to heal hormonal problems or solve internal/external problems. In other words, it aims to reduce user's stress by stimulating the sight. In an embodiment, the refrigerator 1 may provide color therapy that may uplift the user via a simple mood assessment test.

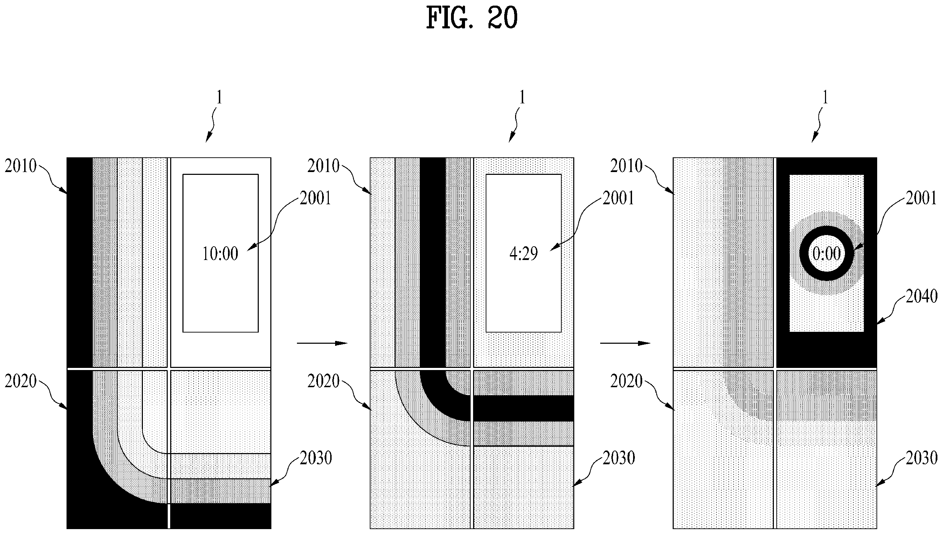

FIG. 20 is a view illustrating an embodiment of changing a color of a door based on timer information in a refrigerator according to an embodiment of the present disclosure. Hereinafter, any content that is redundant with the above description will be omitted.

Referring to FIG. 20, the refrigerator 1 may execute a timer application 2001 on the display panel.

The refrigerator 1 may change colors of a first door 2010, a second door 2020, and a third door 2030 based on the timer information of the timer application 2001.

More specifically, because the refrigerator 1 is an appliance mainly used in the kitchen, it may be helpful to the user when the timer application 2001 is used and output on the refrigerator 1.

In an embodiment, the refrigerator 1 may directly execute the timer application 2001 via the display panel, or may be linked with a timer application running on a user's terminal and output the application on the display panel of the refrigerator 1.

As the timer application 2001 is executed, a timer starts and begins to count down. Accordingly, the refrigerator 1 may output the colors of the first door 2010, the second door 2020, and the third door 2030 by applying a gradient effect.

For example, referring to a first drawing in FIG. 20, when the timer application 2001 starts at 10 minutes, the refrigerator 1 may output a first color on the first door 2010, the second door 2020, and the third door 2030.

Thereafter, referring to a second drawing in FIG. 20, as the timer time of the timer application 2001 decreases, the refrigerator 1 may output the first color on the first door 2010, the second door 2020, and the third door 2030 by applying the gradient effect.

Finally, referring to a third drawing in FIG. 20, when the timer time of the timer application 2001 reaches 0 seconds, the refrigerator 1 may change colors of the first door 2010, the second door 2020, the third door 2030, and a display door 2040 to be uniform to provide an overall lighting alarm effect.

More specifically, the refrigerator 1 may change the colors of the first door 2010, the second door 2020, and the third door 2030 using LED light sources located at rear ends thereof, and may change the color of the display door 2040 including the display panel via the display panel.

When the timer time of the timer application 2001 reaches zero, the refrigerator 1 may control the light sources of the first door 2010, the second door 2020, and the third door 2030 and the display panel of the display door 2040 to output a timer alarm effect. In this regard, the timer alarm effect may correspond to an effect of a waveform that starts from at least one of the first door 2010, the second door 2020, the third door 2030, and the display door 2040 and radiates outward in circles. According to an example of a last drawing in FIG. 20, the refrigerator 1 may output an effect that radiates outward in concentric circles centered on "0:00 seconds" output on the timer application 2001 of the display door 2040.

Accordingly, the user may more clearly recognize the completion of the timer.

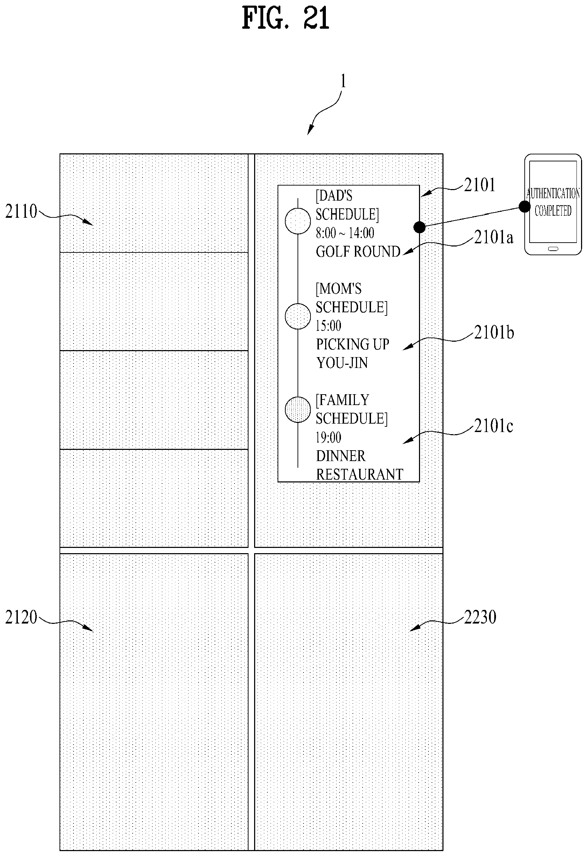

FIG. 21 is a view illustrating an embodiment of changing a color of a door based on schedule information in a refrigerator according to an embodiment of the present disclosure. Hereinafter, any content that is redundant with the above description will be omitted.

Referring to FIG. 21, the refrigerator 1 may execute a schedule application 2101 on the display panel. In this regard, the schedule application 2101 may receive shared schedule information from at least one external device. In this regard, the external device that may transmit and receive the information to and from the refrigerator 1 is limited to one for which authentication between the refrigerator 1 and the external device has been completed.

In an embodiment, the refrigerator 1 may receive the schedule information from the external device via various communication modules (Bluetooth, Wi-Fi, and the like). For example, the refrigerator 1 may receive first schedule information 2101a from a first mobile terminal, receive second schedule information 2101b from a second mobile terminal, and receive third schedule information 2101c from a third mobile terminal.

In an embodiment, the refrigerator 1 may output the first schedule information 2101a, the second schedule information 2101b, and the third schedule information 2101c received/shared on the schedule application 2101.

In this regard, the refrigerator 1 may identify a color corresponding to each schedule information because the schedule information were received from the different mobile terminals. For example, the refrigerator 1 may identify that a color corresponding to the first schedule information 2101a is blue, a color corresponding to the second schedule information 2101b is green, and a color corresponding to the third schedule information 2101c is orange.

In an embodiment, the refrigerator 1 may change colors of a first door 2110, a second door 2120, and a third door 2130 based on the schedule information 2101a, 2101b, and 2101c included in the schedule application 2101 and a current time.

For example, the refrigerator 1 may output the color blue corresponding to the first schedule information 2101a on the first door 2110, the second door 2120, and the third door 2130 when the current time is time indicated in the first schedule information 2101a.

On the other hand, the refrigerator 1 may output the color of green corresponding to the second schedule information 2101b on the first door 2110, the second door 2120, and the third door 2130 when the current time is time indicated in the second schedule information 2101b.

Accordingly, the refrigerator 1 may notify the users of their schedules by changing the color of the doors based on the color assigned to each schedule for the authenticated users when the time for the corresponding schedule arrives.

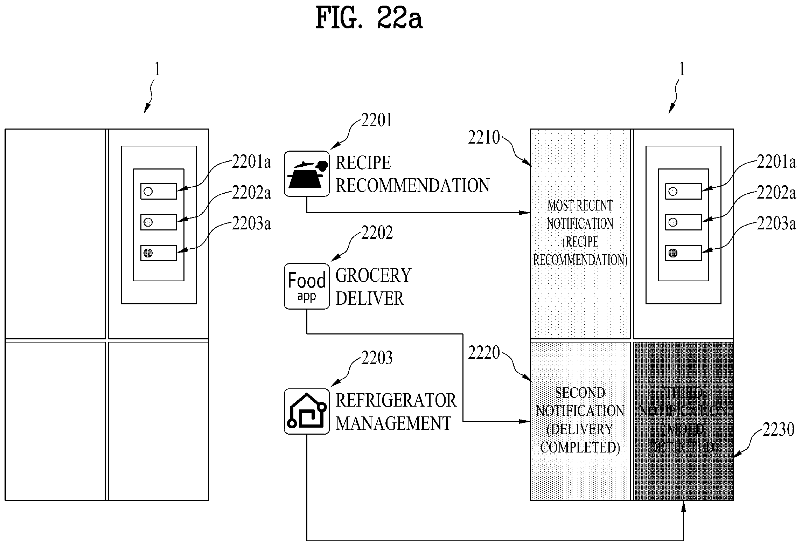

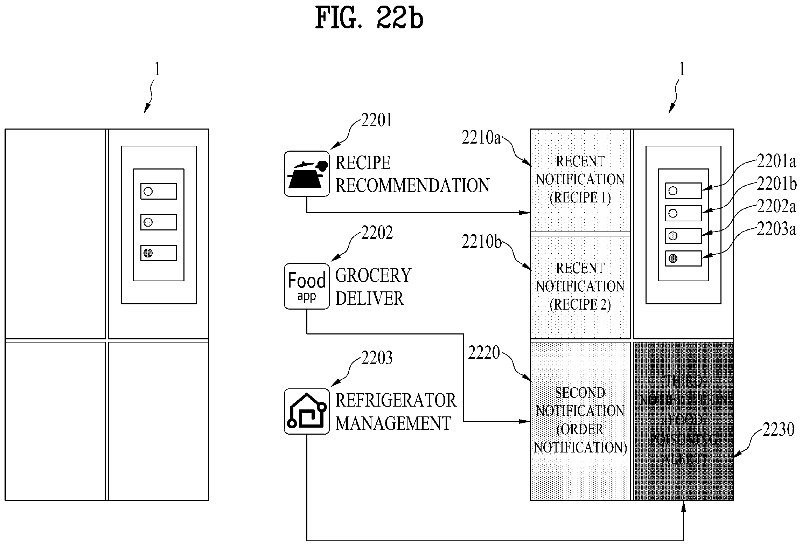

FIGS. 22A and 22B are views illustrating an embodiment of changing a color of a door based on a notification in a refrigerator according to an embodiment of the present disclosure. Hereinafter, any content that is redundant with the above description will be omitted.

Referring to FIG. 22A, the refrigerator 1 may receive a first notification 2201a from a first application 2201. Here, the first application 2201 corresponds to an application installed on the Android OS of the refrigerator 1. Alternatively, the first notification 2201a corresponds to a notification received from the outside. Hereinafter, other applications and notifications are also the same.

In an embodiment, the refrigerator 1 may output information on the first notification 2201a on the display panel. In addition, the refrigerator 1 may output a color corresponding to the first application 2201 on the first door 2210. For example, when the first application 2201 is a recipe recommendation application and a color corresponding to the recipe recommendation application is green, the refrigerator 1 may change a color of a first door 2210 to green when a notification comes from the recipe recommendation application. In this regard, the color corresponding to the first application 2201 may be a representative color of the first application 2201 or a color set in the refrigerator 1.

Similarly, the refrigerator 1 may receive a second notification 2202a from a second application 2202 and output information on the second notification 2202a on the display panel. In an embodiment, the refrigerator 1 may output a color corresponding to the second application 2202 on a second door 2220. In this regard, the second notification 2202a is received later than the first notification 2201a. For example, when the second application 2202 is a grocery delivery application and a color corresponding to the grocery delivery application is yellow, the refrigerator 1 may change a color of the second door 2220 to yellow when a notification such as "delivery complete" comes from the grocery delivery application.

Finally, the refrigerator 1 may receive a third notification 2203a from a third application 2203 and output information on the third notification 2203b on the display panel. In an embodiment, the refrigerator 1 may output a color corresponding to the third application 2203 on a third door 2230. In this regard, the third notification 2203a is received later than the first notification 2201a and the second notification 2202a. For example, when the third application 2203 is a refrigerator management application and a color corresponding to the refrigerator management application is red, the refrigerator 1 may change a color of the third door 2230 to red when a notification such as "mold detected" comes from the refrigerator management application.

That is, the refrigerator 1 may output the colors respectively corresponding to the notifications in a time order of the received notifications on the first door 2210, the second door 2220, and the third door 2230.

In an embodiment of the present disclosure, the refrigerator 1 may receive multiple notifications from the same application. In following FIG. 22b, an embodiment in which a fourth notification 2201b is received after receiving the first notification 2201a from the first application 2201, which is the embodiment in FIG. 22a, will be described.

Referring to FIG. 22b, the refrigerator 1 may receive the fourth notification 2201b after receiving the first notification 2201a from the first application 2201. Accordingly, the refrigerator 1 may output information on the fourth notification 2201b on the display panel.

Thereafter, the refrigerator 1 may divide the first door 2210 into a first area 2210a and a second area 2210b and output the color corresponding to the first application 2201 on the first area 2210a and the second area 2210b.

More specifically, according to the embodiment described above, the refrigerator 1 may irradiate light only to a partial area of the door based on a structure of the light source. Using this, when receiving two or more notifications from one application, the refrigerator 1 may divide the door into areas and output the color corresponding to the application.

According to the above-described example, when receiving the first notification 2201a and the fourth notification 2201b from the recipe recommendation application, the refrigerator 1 may output the color green corresponding to the recipe recommendation application on the first area 2210a and the second area 2210b of the first door 2210 in a distinguished manner.

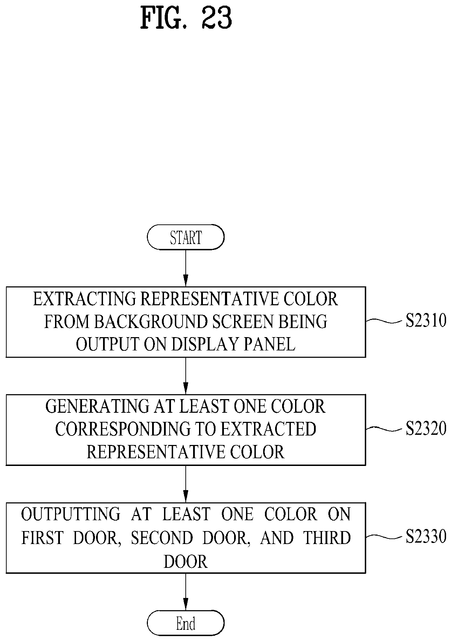

FIG. 23 is a flowchart illustrating a method for controlling a refrigerator according to an embodiment of the present disclosure. Hereinafter, any content that is redundant with the above description will be omitted.

Referring to FIG. 23, in step (S2310), the refrigerator may extract the representative color from the background screen being output on the display panel.

In step (S2320), the refrigerator may generate the at least one color corresponding to the extracted representative color.

In step (S2330), the refrigerator may output the at least one color on the first door, the second door, and the third door.

That is, FIG. 23 shows a flowchart illustrating the method for controlling the refrigerator for the embodiment in FIG. 15, but it is obvious that the embodiments in FIGS. 16 to 22 may also operate with the method for controlling the refrigerator like FIG. 23. A description thereof will be omitted.

With the embodiments described above, the present disclosure has the advantage of being able to set and change the color of the LED door linked to the surrounding environment and the events via the display door and the own smart OS (the Android OS) of the refrigerator without the remote device.

The above-described present disclosure can be implemented as computer-readable code on a computer-readable medium in which a program is recorded. The computer-readable medium can be any type of recording device in which data that can be read by a computer system is stored. Examples of the computer-readable medium include a hard disk drive (HDD), a solid state drive (SSD), a silicon disk drive (SDD), a read only memory (ROM), a random access memory (RAM), a compact disc (CD)-ROM, a magnetic tape, a floppy disk, an optical data storage, and a carrier wave (e.g., data transmission over the Internet). The computer can include the controller 180 of the terminal. It will be apparent to those skilled in the art that various modifications and variations can be made in the present disclosure without departing from the spirit or scope of the disclosure. The above detailed description is therefore to be construed in all aspects as illustrative and not restrictive. The scope of the present disclosure should be determined by reasonable interpretation of the appended claims and all changes coming within the equivalency range of the present disclosure are intended to be included in the scope of the present disclosure.

### [Industrial Applicability]

The present disclosure relates to the refrigerator and the method for controlling the refrigerator, and has industrial applicability because they may be repeatedly implemented.

## Claims

1. A refrigerator comprising:
a cabinet defining at least one space therein;
a display door configured to open and close the space and composed of a display panel configured to output information;
a first door, a second door, and a third door configured to open and close the space and including light sources capable of rendering RGB colors; and
a controller configured to control the display panel and the light sources,
wherein the controller is configured to output at least one color on the first door, the second door, and the third door.

2. The refrigerator of claim 1, wherein the controller is configured to:
extract a representative color from a background screen being output on the display panel; and
generate at least one color related to the extracted representative color.

3. The refrigerator of claim 1, wherein the controller is configured to:
receive a second color from a user via the display panel;
recommend a third color and a fourth color corresponding to the second color; and
output the second color, the third color, and the fourth color on the first door, the second door, and the third door, respectively.

4. The refrigerator of claim 1, wherein the controller is configured to change the color of the first door, the second door, and the third door based on time.

5. The refrigerator of claim 1, further comprising an illuminance sensor configured to sense a surrounding illuminance,
wherein the controller is configured to change the color of the first door, the second door, and the third door based on illuminance information received from the illuminance sensor.

6. The refrigerator of claim 1, wherein the display door includes a front camera,
wherein the controller is configured to:
recognize a user's face via the front camera;
analyze the recognized face to generate face information; and
change the color of the first door, the second door, and the third door based on the face information.

7. The refrigerator of claim 1, wherein the controller is configured to change the color of the first door, the second door, and the third door based on weather information.

8. The refrigerator of claim 1, wherein the controller is configured to:
output at least one question on the display panel;
receive an answer to the question from a user; and
change the color of the first door, the second door, and the third door based on the answer.

9. The refrigerator of claim 1, wherein the controller is configured to:
execute a timer application on the display panel; and
change the color of the first door, the second door, and the third door based on timer information of the timer application.

10. The refrigerator of claim 1, wherein the controller is configured to:
execute a schedule application on the display panel; and
change the color of the first door, the second door, and the third door based on schedule information and current time included in the schedule application.

11. The refrigerator of claim 1, wherein the controller is configured to:
receive a first notification from a first application;
output information on the first notification on the display panel; and
output a color corresponding to the first application on the first door.

12. The refrigerator of claim 11, wherein the controller is configured to:
receive a second notification from a second application;
output information on the second notification on the display panel; and
output a color corresponding to the second application on the second door, wherein the second notification is received later than the first notification.

13. The refrigerator of claim 11, wherein the controller is configured to:
receive a third notification from the first application;
output information on the third notification on the display panel; and
divide the first door into a first area and a second area, and output the color corresponding to the first application on the first area and the second area.

14. The refrigerator of claim 1, wherein the light source included in at least one of the first door, the second door, and the third door has one of a lower edge structure, a side edge structure, a lower-and-side edge structure, and a downward-directed structure,
wherein each of the first door, the second door, and the third door includes a front plate and a light guide plate guiding light to the front plate,
wherein the controller is configured to irradiate light to the light guide plate using the light source,
wherein light irradiated to the light guide plate passes through the front plate,
wherein when the light source is turned on, the front plate emits light with a first color.

15. A method for controlling a refrigerator including a cabinet defining at least one space therein, a display door configured to open and close the space and composed of a display panel configured to output information, a first door, a second door, and a third door configured to open and close the space and including light sources capable of rendering RGB colors, and a controller configured to control the display panel and the light sources, the method comprising:
outputting at least one color on the first door, the second door, and the third door.
